# EUROPÄISCHE PATENTSCHRIFT

(11) **EP 2 866 979 B1**
(45) Veröffentlichungstag und Bekanntmachung des Hinweises auf die Patenterteilung: **21.09.2016**
(21) Anmeldenummer: 13710349.5
(22) Anmeldetag: 12.03.2013
(51) Int. Cl.: B25B 27/10, B21D 39/04, F16L 13/14

(54) **PRESSBACKE, VERFAHREN ZUM HERSTELLEN EINER UNLÖSBAREN ROHRVERBINDUNG, FITTING UND SYSTEM AUS EINER PRESSBACKE UND EINEM FITTING**
CHEEK PLATE, METHOD FOR PRODUCING A NON-DETACHABLE PIPE JOINT, FITTING AND SYSTEM CONSISTING OF A CHEEK PLATE AND A FITTING
MÂCHOIRE DE PRESSION, PROCÉDÉ PERMETTANT DE PRODUIRE UN ASSEMBLAGE DE TUBES INDÉTACHABLE, RACCORD ET SYSTÈME CONSTITUÉ D'UNE MÂCHOIRE DE PRESSION ET D'UN RACCORD

(30) Priorität: 28.06.2012 DE 102012105655
(43) Veröffentlichungstag der Anmeldung: 06.05.2015
(60) Teilanmeldung: 15159166.6
(73) Patentinhaber: Viega GmbH & Co. KG, 57439 Attendorn (DE)
(72) Erfinder: HOFMANN, Frank, 57439 Attendorn (DE)
(74) Vertreter: Cohausz & Florack
(86) Internationale Anmeldenummer: PCT/EP2013/054996
(87) Internationale Veröffentlichungsnummer: WO 2014/000897

(56) Entgegenhaltungen:
- EP-A2- 1 293 273
- EP-A2- 1 347 226
- WO-A1-96/20807
- DE-A1- 2 332 241
- DE-A1-102004 016 305
- DE-A1-102008 010 083
- DE-C1- 10 105 013
- DE-U1-202004 012 774
- GB-A- 2 440 445
- US-A- 3 375 026
- US-A- 4 956 904

## Beschreibung

Die Erfindung betrifft eine Pressbacke zum Herstellen einer unlösbaren Rohrverbindung mit einer oberen Backenhälfte und mit einer unteren Backenhälfte, mit mindestens einer Drehachse, welche zumindest eine Backenhälfte schwenkbar lagert, mit einem zwischen der oberen Backenhälfte und der unteren Backenhälfte gebildeten und eine Aufnahmebereichsachse aufweisenden Aufnahmebereich, wobei die mindestens eine Backenhälfte zwischen einer offenen und einer geschlossenen Stellung im Wesentlichen quer zur Aufnahmebereichsachse verschwenkbar ist.

Pressbacken, Fittings, Systeme und Verfahren der eingangs genannten Art sind aus dem Stand der Technik beispielsweise aus dem Trinkwasser- oder Heizungsinstallationsbereich bereits bekannt. Unter einer unlösbaren Rohrverbindung wird dabei insbesondere verstanden, dass die Verbindung nicht zum Lösen und Wiederverbinden ausgelegt ist, sich also nicht mehr oder nur noch schwierig, insbesondere nur durch Zerstörung der einzelnen Werkstücke der Rohrverbindung wieder lösen lässt.

Dabei soll die Rohrverbindung möglichst einfach und sicher herzustellen sein und eine hohe Dichtigkeit für eine möglichst lange Zeit gewährleisten. Vorzugsweise werden Pressbacken bzw. Verfahren verwendet, um Werkstücke wie Fittings, Rohre, Muffen oder ähnliches im Wesentlichen radial, d.h. quer zur Aufnahmebereichsachse, zu verpressen. Die Aufnahmebereichsachse verläuft dabei in etwa senkrecht zu der zwischen den Backenhälften aufgespannten Fläche. Bei einem zylinderförmigen Aufnahmebereich entspricht die Aufnahmebereichsachse im Wesentlichen der Zylinderachse. Bei einem in den Aufnahmebereich eingelegten Werkstück stimmen dann die Aufnahmebereichsachse und die Werkstückachse beispielsweise eines Rohrs oder Fittings, zumindest bei geschlossenen Backenhälften, im Wesentlichen überein. Durch die zangenartige Schließbewegung der Backenhälften werden zwei oder mehr zumindest teilweise in Überlappung im Aufnahmebereich angeordnete Werkstücke, beispielsweise ein Fitting und ein Rohr, umgeformt und damit unlösbar miteinander verbunden.

Für die Schließbewegung der Pressbacke wird häufig eine Pressmaschine verwendet, auf die die Pressbacke aufgesteckt wird und die einen Bolzen oder Rollen zwischen die hinteren Enden der Backenhälften der Pressbacke schiebt, um die den Aufnahmebereich bildenden vorderen Enden der Backenhälften zu schließen. Alternativ oder zusätzlich kann beispielsweise auch eine manuelle Betätigung der Pressbacke vorgesehen sein. Die Unterscheidung in "obere" und "untere" (beispielsweise Backenhälfte) ist nicht begrenzend zu verstehen. Vielmehr kann die Pressbacke beliebig im Raum ausgerichtet sein.

Die Verpressungen aus dem Stand der Technik können allerdings nachteilig sein. Mit für diesen Zweck vorgesehenen Pressbacken bzw. Verfahren ist beispielsweise die Ausübung einer allseitig homogenen Presskraft auf die zu verpressenden Werkstücke deutlich erschwert. Vorzugsweise haben Rohre und Fittings vor dem Pressvorgang eine rotationssymmetrische und weitgehend runde Form. Nach dem Pressvorgang kann diese Symmetrie aufgrund inhomogen wirkender Presskräfte an der Verbindungsstelle zwischen Rohr und Fitting jedoch gestört sein, was insbesondere die Funktionalität der Verbindung beeinträchtigen kann.

Weiterhin können die Werkstoffe, insbesondere Kunststoff oder Metall der bei dem Pressvorgang beanspruchten Werkstücke ein gegen die Presskräfte gerichtetes Beharrungsvermögen aufweisen. Dieses Beharrungsvermögen kann in Form von Rückstellkräften dazu führen, dass das bei dem Pressvorgang umgeformte Material zumindest teilweise den Ausgangszustand bzw. das Ausgangsgefüge der Werkstücke wiederherzustellen bestrebt ist. Dies erfordert von dem Anwender eines lediglich radial einwärtig wirkenden Pressverfahrens, dass er beispielsweise die radial einwärtig auszuübenden Presskräfte erhöhen muss, um das gewünschte Pressergebnis zu erhalten. Dies stellt jedoch eine über das eigentliche Maß hinausgehende und deshalb grundsätzlich unerwünschte Inanspruchnahme der Werkstoffe der zu verpressen Werkstücke dar.

Die zuvor genannten Probleme können insbesondere mittels einer so genannten axialen Verpressungstechnik gelöst bzw. zumindest reduziert werden. Axial bedeutet hier, dass eine Bewegung der zu verpressenden Werkstücke zumindest teilweise entlang der Werkstückachse bzw. der Aufnahmebereichsachse, vollzogen wird. Die Rückstelleigenschaften der zu verformenden Werkstücke wirken zwar grundsätzlich auch in axialer Richtung, allerdings können die Auswirkungen einer erhöhten Beanspruchung des Materials wegen der üblicherweise im Vergleich zur radialen Ausdehnung langen axialen Ausdehnung der Werkstücke gering gehalten werden.

Presswerkzeuge für eine solche axiale Verpressung sind allerdings sehr groß und klobig, da sie den axial zu verpressenden Bereich weit umgreifen müssen. Aus diesem Grund ist beispielsweise aus der deutschen Offenlegungsschrift DE 10 2008 010 083 A1 ein Verfahren bekannt, bei welchem auch ein Presswerkzeuge zum radialen Verpressen mithilfe von geneigten Pressflächen am Werkzeug und am Fitting eine axiale Verpressung quer zur Aufnahmebereichsachse erzielen kann. Ein Fitting kann so trotz der Bewegung der Backenshälften quer zur Aufnahmebereichsachse entlang der Aufnahmebereichsachse verpresst werden.

Zur Übersetzung bzw. Umlenkung der Presskraft ist allerdings ein gewisser Weg nötig, welcher über die geneigten Flächen an der Außenumfangsfläche des Fittings bereitgestellt wird. Problematisch ist dabei, dass hierfür Fittings benötigt werden, welche im Durchmesser stark aufbauen, da durch die geneigten Pressflächen der Durchmesser der Fittings vergrößert wird. Dies führt dann einerseits zu größeren und unhandlicheren Fittings und andererseits auch zu einem höheren Materialverbrauch, d.h. höheren Herstellungskosten der Fittings.

Die zuvor beschriebenen axial zu verpressenden Fittings verwenden in der Regel ein Dichtelement aus einem elastischen Werkstoff, insbesondere bestehend aus einem Elastomer. Ebenso sind Fittings mit einer Abdichtung zwischen zwei Metallwerkstücken, sogenannte metallisch dichtende Fittings mit axialer Verpressung bekannt. Diese axial zu verpressenden Fittings weisen bereits vor dem Verpressen radial nach innen vorstehende Schneiden oder Rippen auf, die während des Verpressens in das Material des zu verbindenden Rohres eindringen und somit zur Abdichtung führen. Der Aufbau des Fittings ist somit komplex und aufwändig in der Herstellung. Derartige Fittings sind aus der US 5,114,191, DE 100 26 083 C1 und der DE 101 05 013 C1 bekannt.

Die DE 10 2004 016305 A1 offenbart eine Pressvorrichtung zur axialen Verschiebung mit einem koaxial um die zu verpressenden Teile legbaren Gehäuse. Die US 4,956,904 A beschreibt eine weitere Vorrichtung, welche ein axiales Verpressen eines Rohres mit einem Verbindungsstück ermöglicht.

In der GB 2 440 445 A wird Axialpresswerkzeug mit einem Rohrhalter und einem relativ dazu verschiebbaren Fittinghalter beschrieben. Ein weiteres Axialpresswerkzeug ist aus der WO 96/20807 A1 bekannt.

Aus der EP 1293 273 A2 ist ein Verfahren zur Verpressung eines Fittings mit einem Rohr bekannt, bei dem eine Ringwulst mit einem Dichtelement über Pressbacken verformt wird.

Daneben sind seit langem Lötfittings mit einem sehr einfachen Aufbau bekannt. Lötfittings bestehen aus einem einfachen Rohrstück, das in der Regel einen gleichen Innendurchmesser wie das damit zu verbindende Rohrstück aufweist. Mindestens ein Ende des Lötfittings ist über einen vorgegebenen Aufnahmeabschnitt so weit als Muffe aufgeweitet, dass der Innendurchmesser im Wesentlichen dem Außendurchmesser des zu verbindenden Rohres entspricht. Das zu verbindende Rohr wird dann in den aufgeweiteten Abschnitt, also in die Muffe eingeführt und der Fitting und das Rohrstück werden mittels Lot stoffschlüssig verbunden.

Daher haben Lötfittings ein breites Einsatzspektrum und stellen aufgrund der geringen Herstellungskosten eine preiswerte Alternative gegenüber Pressfittings dar. Durch das Lot gelten sie zwar als metallisch abdichtend, jedoch sind Lötfittings aufgrund der verschiedenen Metalle von Rohr und Lot nicht werkstoffrein. Des Weiteren müssen die Fittings aufwändig vor Ort verlötet werden, was einerseits sehr zeitaufwändig und anderseits je nach Umgebung gar nicht zulässig ist. Für diverse technische Anwendungsfälle fehlt daher ein metallisch dichtender, aber gleichwohl wirtschaftlich vergleichbarer Pressfitting.

Vor diesem Hintergrund stellt sich der vorliegenden Erfindung die Aufgabe, eine Pressbacke, ein System mit einer Pressbacke, ein Verfahren und einen Fitting anzugeben, wobei die Pressbacke auf einfache Weise eine Verpressung quer zur Aufnahmebereichsachse ermöglicht und gleichzeitig eine Reduzierung der Werkstückgröße, insbesondere der Fittinggröße, ermöglicht wird.

Gemäß einer ersten Lehre der Erfindung wird das technische Problem durch eine gattungsgemäße Pressbacke zum Herstellen einer unlösbaren Rohrverbindung dadurch gelöst, dass mindestens eine Schiebeeinheit vorgesehen ist, wobei die Schiebeeinheit eine im Wesentlichen quer zur Aufnahmebereichsachse verlaufende Schwenkbewegung der mindestens einen Backenhälfte in eine zumindest teilweise parallel zur Aufnahmebereichsachse gerichtete Verschiebung umwandelt..

Dadurch, dass die Pressbacke mindestens eine Schiebeeinheit aufweist, welche zumindest teilweise parallel zur Aufnahmebereichsachse verschiebbar ist, kann bei einer gattungsgemäßen Pressbacke auf einfache Weise erreicht werden, dass trotz einer Schwenkbewegung quer zur Aufnahmebereichsachse eine Verpressung entlang der Aufnahmebereichsachse des eingelegten Werkstücks bzw. der eingelegten Werkstücke ermöglicht werden kann. Die Schiebeeinheit ermöglicht dabei die Verpressung parallel zur Aufnahmebereichsachse. Hierbei müssen keine den Durchmesser des Fittings vergrößernden, hoch aufbauenden Gleitflächen zur Kraftumlenkung am Fitting vorgesehen sein. Vielmehr kann der Fitting mit geringem Durchmesser ausgelegt werden, sodass ein platzsparender und aufgrund der Materialeinsparung günstig herzustellender Fitting bereitgestellt werden kann. Ein Werkstück, beispielsweise ein Fitting bzw. eine Fittingkomponente, kann nämlich direkt durch die zumindest teilweise parallele Bewegung der Schiebeeinheit parallel zur Aufnahmebereichsachse und relativ zu zumindest einer Backenhälfte bewegt werden, ohne eine Kraftumlenkung mittels Gleitflächen am Fitting vorsehen zu müssen. Hierdurch kann zudem ein im Vergleich zu axialen Pressmaschinen aus dem Stand der Technik handlichere Pressbacke bereitgestellt werden. Die Pressbacke kann auch zum Verpressen anderer Werkstücke als Fittings Verwendung finden.

Unter einer Verschiebung zumindest teilweise parallel zur Aufnahmebereichsachse wird verstanden, dass die Schiebeeinheit sich auch nur abschnittsweise und/oder nur zeitweise in diese Richtung bewegen kann. Auch kann die Schiebeeinheit beispielsweise eine Bewegung gleichzeitig parallel und quer zur Aufnahmebereichsachse durchführen, sodass zumindest eine Komponente der Bewegung parallel zur Aufnahmebereichsachse ist. Im Ergebnis bewegt sich die Schiebeeinheit somit insbesondere auch zumindest teilweise parallel zur mit der Aufnahmebereichsachse zusammenfallenden oder parallelen Werkstückachse. Es ist bevorzugt, wenn die Schiebeeinheit im Wesentlichen linear verschiebbar ist.

Die mindestens eine Drehachse zur Lagerung der mindestens einen Backenhälfte (vorzugsweise beider Backenhälften) kann vorzugsweise mithilfe einer Halterung realisiert sein, welche die mindestens eine Drehachse bereitstellen kann. Dabei kann die unter Backenhälfte auch mittels einer von der die obere Backenhälfte lagernde Drehachse getrennten Drehachse gelagert werden. Die Drehachsen sind dabei aber vorzugsweise im Wesentlichen parallel angeordnet.

Da die mindestens eine Backenhälfte um die mindestens eine Drehachse im Wesentlichen quer zur Aufnahmebereichsachse geschwenkt werden kann, sind Aufnahmebereichsachse und die mindestens eine Drehachse im Wesentlichen parallel.

Das zu verpressende Werkstück ist vorzugsweise ein Fitting bestehend vorzugsweise aus einem Fittinggrundkörper und einer Presshülse, welche auf den Fittinggrundkörper aufgeschoben werden kann. Ein Rohrstück kann dann beispielsweise in den Fittinggrundkörper eingeschoben werden. Durch das Aufschieben der Presshülse auf den Fittinggrundkörper und/oder das Rohr wird dann eine Verpressung parallel zur Aufnahmebereichsachse, d.h. eine axiale Verpressung, durchgeführt. Durch die Presshülse wird dabei eine homogene radial einwärtige Kraft auf Fittinggrundkörper und/oder Rohrstück ausgeübt.

Gemäß einer Ausgestaltung der erfindungsgemäßen Pressbacke weist die obere Backenhälfte ein erstes oberes Backenviertel und ein zweites oberes Backenviertel auf, die untere Backenhälfte ein erstes unteres Backenviertel und ein zweites unteres Backenviertel. Die ersten Backenviertel sind dabei zumindest teilweise unabhängig von den zweiten Backenvierteln schließbar. Mit anderen Worten bilden die ersten Backenviertel dabei ein aus sich gegenüberliegenden ersten unteren und oberen Backenvierteln bestehendes Backenpaar, währende die zweiten Backenviertel ein aus sich gegenüberliegenden zweiten unteren und oberen Backenvierteln bestehendes Backenpaar bilden. Die Backenviertel können allerdings weiterhin durch mindestens eine gemeinsame Drehachse gelagert werden. Vorzugsweise werden die oberen Backenviertel aber durch eine Drehachse gelagert, während die unteren Backenviertel durch eine weitere Drehachse gelagert werden. Die obere Backenhälfte ist vorzugsweise spiegelsymmetrisch zu der unteren Backenhälfte aufgebaut, die oberen Backenviertel also spiegelsymmetrisch zum jeweiligen unteren Backenviertel.

Durch das Vorsehen von Backenvierteln kann eine anwendungs-spezifische Verpressung realisiert werden, also die Verpressung beispielsweise zeitlich und/oder örtlich unterschiedlich gestaltet werden. So können die zweiten Backenviertel beispielsweise zeitlich nach den ersten Backenvierteln geschlossen werden. Auch können die ersten und die zweiten Backenviertel durch entsprechende Gestaltung der Backenviertel mit unterschiedlichen Funktionen versehen werden. Es können auch mehr als vier Backenteile vorgesehen sein.

Gemäß einer besonders bevorzugten Ausgestaltung der Pressbacke ist eine Kopplung zwischen der Schiebeeinheit und mindestens einem zweiten Backenviertel vorgesehen, und zwar derart, dass die zur Aufnahmebereichsachse zumindest teilweise parallele Verschiebung der Schiebeeinheit an die Schließbewegung des mindestens einen zweiten Backenviertels, welche im Wesentlichen quer zur Aufnahmebereichsachse erfolgt, zumindest teilweise gekoppelt ist.

Auf diese Weise kann auf besonders einfache Art und Weise die Verschiebung der Schiebeeinheit realisiert werden und in die Schließbewegung der Pressbacke integriert werden. Es ist so keine zusätzliche, beispielsweise externe Betätigung der Schiebeeinheit notwendig. Zudem können bereits vorhandene Pressmaschinen, welche zur radialen Verpressung ausgelegt sind, auch für die axiale Verpressung benutzt werden. Eine Kopplung kann beispielsweise über eine mechanische Kraftumlenkung erreicht werden, sodass die Schwenkbewegung des mindestens einen zweiten Backenviertels, welche im Wesentlichen quer zu der Aufnahmebereichsachse bzw. quer zur mindestens einen Drehachse erfolgt, eine Verschiebung der Schiebeeinheit zumindest teilweise parallel zur Aufnahmebereichsachse verursacht. Die Kopplung kann dabei beispielsweise über Kontaktflächen, Gelenke und/oder pneumatisch erfolgen, um nicht abschließende Beispiele aufzuzählen. Aufgrund der Kopplung müssen die Schiebeeinheit und das mindestens eine erste Backenviertel nicht intergral aufgebildet sein. Vorzugsweise ist die Schiebeeinheit an das zweite obere Backenviertel und das zweite untere Backenviertel gekoppelt.

Dass die Schiebeinheit und das mindestens eine zweite Backenviertel zumindest teilweise gekoppelt sind, bedeutet, dass eine Kopplung beispielsweise nur bei der Schließbewegung des mindestens einen zweiten Backenviertels erfolgen kann oder auch nur teilweise während der Schließbewegung erfolgen kann. Die Kopplung kann also während des Pressvorgangs zeitlich begrenzt sein. So kann beispielsweise eine Schließbewegung des mindestens einen zweiten Backenviertels erfolgen, ohne dass eine Verschiebung der Schiebeeinheit parallel zur Aufnahmebereichsachse erfolgt.

Vorteilhafterweise erfolgt eine Verschiebung der Schiebeeinheit zumindest teilweise parallel zur Aufnahmebereichsachse nur dann, wenn eine Bewegung des zweiten oberen Backenviertels relativ zum ersten oberen Backenviertel erfolgt (falls eine Kopplung zwischen der Schiebeeinheit und dem oberen ersten Backenviertel vorgesehen ist) bzw. wenn eine Bewegung des zweiten unteren Backenviertels relativ zum ersten unteren Backenviertel erfolgt (falls eine Kopplung zwischen der Schiebeeinheit und dem unteren ersten Backenviertel vorgesehen ist).

Gemäß einer vorteilhaften Ausgestaltung der Pressbacke ist die Kopplung durch an der Schiebeeinheit und zumindest einem zweiten Backenviertel vorgesehene und aneinander angepasste Kontaktflächen realisiert, welche gegenüber der Aufnahmebereichsachse geneigt sind. Dadurch kann die Kopplung auf besonders einfache und kostengünstige Art realisiert werden. Über die Neigung der Kontaktflächen kann zudem die Übersetzung von der Schließbewegung des entsprechenden Backenviertels im Wesentlichen quer zur Aufnahmebereichsachse zu der Verschiebung der Schiebeeinheit eingestellt werden.

Vorzugsweise sind die aneinander angepassten Kontaktflächen während eines gesamten Pressvorgangs miteinander in Kontakt, also sowohl bei geöffneten zweiten Backenvierteln als auch bei geschlossenen zweiten Backenvierteln, um eine effiziente Kraftübertragung zu erzielen. Die Kontaktflächen können vorteilhafterweise gleitfördernd ausgebildet sein.

Es hat sich herausgestellt, dass, wenn die Kontaktflächen um mindestens 30°, bevorzugt um mindestens 40°, und besonders bevorzugt um mindestens 45°, und/oder um maximal 80°, bevorzugt um maximal 70°, besonders bevorzugt um maximal 60°, gegenüber der Aufnahmebereichsachse geneigt sind, eine besonders effiziente Kraftübertragung bei gleichzeitig geringer Größe des Pressbake erreicht werden kann.

Der bevorzugte Neigungswinkel der Kontaktflächen kann dabei in Abhängigkeit der zu verpressenden Werkstücke, insbesondere in Abhängigkeit der Nennweite der zu verpressenden Rohre, variieren. Wird der Neigungswinkel nach oben begrenzt, kann eine ausreichende Bewegung der Schiebeeinheit parallel zur Aufnahmebereichsachse, das heißt ein ausreichender Hub, bei der axialen Verpressung sichergestellt werden. Wird der Neigungswinkel nach unten begrenzt, kann erreicht werden, dass eine ausreichende Kraftübersetzung erzielt werden kann. Zudem kann bei größeren Neigungswinkeln eine kompaktere Konstruktion der Pressbacke erzielt werden.

Gemäß einer weiteren Ausgestaltung der erfindungsgemäßen Pressbacke sind die zweiten Backenviertel gegenüber den ersten Backenviertel entlang der Aufnahmebereichsachse versetzt angeordnet. Durch diese axiale Versetzung wird auf besonders einfache Weise erreicht, dass die Verpressung durch die ersten Backenviertel und/oder die zweiten Backenviertel beispielsweise zeitlich und/oder örtlich unterschiedlich gestaltet werden kann.

Dabei ist es vorteilhaft, wenn die ersten Backenviertel im Wesentlichen in einer ersten Ebene im Wesentlichen quer zur Aufnahmebereichsachse liegen und die zweiten Backenviertel im Wesentlichen in einer zweiten Ebene im Wesentlichen quer zur Aufnahmebereichsachse liegen. Mit anderen Worten liegen die ersten und die zweiten Backenviertel jeweils in einer Radialebene der Aufnahmebereichsachse. Auf diese Weise kann insbesondere der zwischen der oberen Backenhälfte und der unteren Backenhälfte gebildete Aufnahmebereich im Wesentlichen in zwei Teilbereiche unterteilt werden, wobei in dem ersten Teilbereich die ersten Backenviertel, beispielsweise über eine Innenkontur, auf das einzulegende Werkstück einwirken können und in dem zweiten Teilbereich die zweiten Backenviertel, beispielsweise über die Schiebeeinheit, das einzulegenden Werkstück beeinflussen können.

Dabei ist der Begriff der Ebene weit aufzufassen, da die Backenviertel nicht zuletzt eine endliche Ausdehnung in axialer Richtung, also in Richtung der Aufnahmebereichsachse haben. Insofern können im Sinne dieser Ausgestaltung die in unterschiedlichen Ebenen liegenden Backenviertel auch teilweise in Richtung der Aufnahmebereichsachse überlappen und/oder ineinander eingreifen. Im Bereich der mindestens einen Drehachse und/oder im Bereich von optional vorgesehenen Einlaufkonturen am hinteren Ende der Backenviertel überlappen die ersten und die zweiten Backenviertel allerdings in Richtung der Aufnahmebereichsachse vorzugsweise nicht.

Sind die ersten Backenviertel als Klemmbacken ausgebildet, kann eine Fixierung eines oder mehrerer Werkstücke relativ zu den ersten Backenvierteln erreicht werden. Durch die Klemmbacken kann das Werkstück bzw. können die Werkstücke insbesondere in Richtung der Aufnahmebereichsachse, also in axialer Richtung, fixiert werden. So kann beispielsweise der Grundkörper eines Fittings oder ein Rohrstück eingeklemmt werden. Dabei kann das Klemmen sowohl durch Reibschluss als auch durch Formschluss erreicht werden. Ebenfalls kann eine Verformung des geklemmten Werkstücks bzw. der geklemmten Werkstücke erfolgen. Durch die Fixierung kann insbesondere eine besonders einfache und effektive Verpressung durch die Schiebeeinheit erreicht werden. Beispielsweise muss das zu verpressende Werkstück bzw. die Werkstücke nämlich nicht durch eine äußere Kraft in Richtung der Aufnahmebereichsachse in Position gehalten werden, während die Schiebeinheit die Verpressung in Richtung der Aufnahmebereichsachse durchführt.

Die als Klemmbacken ausgestalteten ersten Backenviertel können hierzu insbesondere eine als Klemmprofil ausgestaltete Innenkontur aufweisen, welche zumindest einen Teil des Aufnahmebereichs begrenzen. Diese Kontur ist insbesondere im Wesentlichen zylinderförmig, wobei diese beispielsweise eine Riffelung oder ein spezielles Profil zur Fixierung des eingelegten Werkstücks aufweisen kann.

Die ersten Backenhälften sind insbesondere so ausgebildet, dass eine Schließbewegung der ersten Backenviertel im Wesentlichen quer zur Aufnahmebereichsachse eine Kraft im Wesentlichen quer zur Aufnahmebereichsachse, d.h. im Wesentlichen in einwärtiger radialer Richtung, erzeugt.

Besonders bevorzugt ist insbesondere in diesem Zusammenhang, wenn die Backenviertel derart gestaltet sind, dass die Schließbewegung der ersten Backenviertel zeitlich vor der Verschiebung der Schiebeeinheit zumindest teilweise parallel zur Aufnahmebereichsachse erfolgt. So ist sichergestellt, dass beispielsweise eine entsprechende Fixierung eines Fittinggrundkörpers erfolgt ist, bevor beispielsweise eine Presshülse durch die Schiebeeinheit aufgeschoben wird.

Eine weitere Ausgestaltung der erfindungsgemäßen Pressbacke ist dadurch gekennzeichnet, dass die ersten Backenviertel eine erste Einlaufgeometrie aufweisen, die zweiten Backenviertel eine zweite Einlaufgeometrie aufweisen, wobei die erste Einlaufgeometrie und die zweite Einlaufgeometrie unterschiedlich ausgebildet sind. Auf diese Weise kann besonders einfach ein zeitlich angepasste Bewegung, insbesondere der Schließbewegung, der ersten und der zweiten Backenviertel erreicht werden. So kann beispielsweise zuerst eine teilweise oder vollständige Schließbewegung der ersten Backenviertel vorgesehen sein, bevor die zweiten Backenviertel eine Schließbewegung durchführen.

Besonders bevorzugt ist es allerdings, wenn die ersten Backenviertel zumindest vollständig geschlossen sind, bevor die zweiten Backenviertel vollständig geschlossen sind. Dadurch kann erreicht werden, dass die zur Aufnahmebereichsachse zumindest teilweise parallele Verschiebung der Schiebeeinheit zeitlich zu der Schließbewegung der ersten Backenviertel versetzt ist. Dadurch kann beispielsweise zuerst ein Klemmen oder Pressen eines eingelegten Werkstücks erfolgen und erst hiernach eine zur Aufnahmebereichsachse zumindest teilweise parallele Verschiebung eines weiteren Werkstücks oder anderen Teils des Werkstücks durch die Schiebeeinheit.

Sind Führungsmittel zwischen der Schiebeeinheit und zumindest einem ersten Backenviertel vorgesehen, sodass die Bewegung der Schiebeeinheit im Wesentlichen quer zur Aufnahmebereichsachse an die Bewegung des entsprechenden zumindest einen ersten Backenviertels gekoppelt ist, kann ein Ansetzten der Schiebeeinheit an das zu verschiebende Werkstück bzw. die zu verschiebenden Werkstücke zusammen mit der Schließbewegung der ersten Backenviertel erfolgen. Die Führungsmittel sind insbesondere in Form von im Wesentlichen parallel zur Aufnahmebereichsachse verlaufenden Schienen und Führungsbolzen vorgesehen, auf denen die Schiebeeinheit eine Bewegung parallel zur Aufnahmebereichachse durchführen kann. So kann die Schiebeeinheit, insbesondere wenn die ersten Backenviertel geschlossen sind, eine zumindest teilweise zur Aufnahmebereichachse parallele Verschiebung erfahren. Durch die Führungsmittel kann auch eine Abweichung der Schiebeeinheit von einem durch die Führungsmittel vorgesehenen Pfad unterbunden werden.

Während die Bewegung der Schiebeeinheit quer zur Aufnahmebereichsachse dann durch die ersten Backenviertel bestimmt wird, wird die Verschiebung der Schiebeeinheit im Wesentlichen parallel zur Aufnahmebereichsachse dann vorzugsweise durch die zweiten Backenviertel bestimmt.

Es ist denkbar die Führungsmittel federgespannt vorzusehen, sodass beispielsweise eine automatische Rückkehr der Schiebeeinheit nach dem Verpressen parallel zur Aufnahmebereichsachse in die Ausgangsposition erreicht wird.

Die Schiebeeinheit wird vorzugsweise auf die ersten Backenviertel zugeschoben, insbesondere in eine Aufnahme in die ersten Backenviertel zumindest teilweise eingeschoben. So kann eine besonders platzsparende Pressbacke vorgesehen werden.

Die Pressbacke ist gemäß einer vorteilhaften Ausgestaltung dadurch gekennzeichnet, dass die Schiebeeinheit ein oberes Schiebeelement und unteres Schiebeelement aufweist. So kann das untere Schiebeelement der unteren Backenhälfte und das oberer Schiebeelement der oberen Backenhälfte zugeordnet werden. Auf diese Weise kann zudem eine homogene Kraft auf das parallel zur Aufnahmenbereichsachse zu verschiebende Werkstück, beispielsweise eine Presshülse, ausgeübt werden. Ebenfalls ist es denkbar, eine Schiebeeinheit vorzusehen, welche mehr als zwei Schiebelemente aufweist.

Gemäß einer zweiten Lehre der Erfindung wird die Aufgabe durch ein System aus einer erfindungsgemäßen Pressbacke, und einem einen Fittinggrundkörper und eine Presshülse aufweisenden Fitting gelöst, wobei der Aufnahmebereich der Pressbacke an den Fittinggrundkörper angepasst ist und wobei die Schiebeeinheit der Pressbacke an die Presshülse angepasst ist, sodass die Presshülse durch die zumindest teilweise zur Aufnahmebereichsachse parallele Bewegung der Schiebeeinheit zumindest teilweise auf den Fittinggrundkörper aufschiebbar ist.

Durch das Vorsehen einer an die Presshülse angepasste Schiebeeinheit, wobei die Presshülse durch die zumindest teilweise zur Aufnahmebereichsachse parallele Bewegung der Schiebeeinheit zumindest teilweise auf den Fittinggrundkörper aufschiebbar ist, wird auf einfache Weise ein System bereitgestellt, mit dem eine Verpressung in Richtung der Aufnahmebereichsachse bzw. der Fittingachse erfolgen kann. Hierbei fallen vorzugsweise, zumindest im geschlossenen Zustand der Pressbacke, die Achse der Presshülse, die Achse des Fittinggrundkörpers und die Aufnahmebereichsachse zusammen.

Die Schiebeeinheit ermöglicht dabei das Aufschieben der Presshülse auf den Fittinggrundkörper. Dabei muss die Presshülse nicht unmittelbar auf den Fittinggrundkörper aufgeschoben werden. Es können auch weitere Fittingkomponenten oder Rohrstücke dazwischen vorgesehen sein.

Im Ergebnis müssen keine den Durchmesser des Fittings vergrößernden, hoch aufbauenden Gleitflächen am Fitting vorgesehen sein. Vielmehr kann der Fitting, insbesondere die Presshülse, mit geringem Durchmesser ausgelegt werden, sodass ein platzsparender und aufgrund der Materialeinsparung günstig herzustellender Fitting bereitgestellt werden kann. Hierdurch kann zudem ein im Vergleich zum Stand der Technik handlichere System bereitgestellt werden.

Eine Anpassung der Schiebeeinheit kann beispielsweise durch radiale einwärtige Vorsprünge auf der Innenkontur der Schiebeeinheit erreicht werden, welche die Presshülse hintergreifen und/oder in korrespondierende Aussparungen greifen können. Alternativ oder zusätzlich können auch radial ausgreifende Vorsprünge auf der Presshülse vorgesehen sein, welche mit der Schiebeeinheit korrespondieren.

Eine Anpassung der Pressbacke an den Grundkörper des Fittings erfolgt insbesondere durch eine Anpassung der ersten Backenviertel, welche den Fittinggrundkörper vorzugsweise fixieren.

Hinsichtlich weiterer Ausgestaltungen und Vorteile des erfindungsgemäßen Systems wird auf die Unteransprüche bzw. auf die Ausführungen zur erfindungsgemäßen Pressbacke verwiesen.

Gemäß einer dritten Lehre der Erfindung wird die Aufgabe durch ein Verfahren zum Herstellen einer unlösbaren Rohrverbindung mit einer Pressbacke, insbesondere mit einer erfindungsgemäßen Pressbacke, gelöst, bei dem durch Betätigung der Pressbacke ein in einem Aufnahmebereich der Pressbacke befindlicher Fittinggrundkörper fixiert wird und bei dem nach der Fixierung des Fittinggrundkörpers durch eine zur Aufnahmebereichsachse zumindest teilweise parallele Bewegung einer Schiebeeinheit der Pressbacke die Presshülse auf den Fittinggrundkörper aufgeschoben wird.

Mit dem erfindungsgemäßen Verfahren wird auf einfache Weise eine axiale Verpressung ermöglicht und gleichzeitig eine Reduzierung der Fittinggröße ermöglicht. Durch die Fixierung des Fittinggrundkörpers und die zur Aufnahmebereichsachse zumindest teilweise parallele Bewegung der Schiebeeinheit wird eine axiale Verpressung erreicht, ohne dass hoch aufbauende Fittings oder wuchtige axiale Pressmaschinen verwendet werden müssen.

Vorteilhafterweise wird das Rohrstück durch ein erstes oberes und ein erstes unteres Pressbackenviertel der Pressbacke fixiert und die zumindest teilweise zur Aufnahmebereichsachse parallele Bewegung der Schiebeeinheit durch eine Schließbewegung eines zweiten unteren und eines zweiten oberen Pressbackenviertel erreicht. Auf diese Weise werden ein besonders sicheres und einfach durchzuführendes Verfahren und der Einsatz einer besonders kompakten Pressbacke ermöglicht.

Wie nachfolgend noch näher erläutert wird, eignet sich das zuvor beschriebene Verfahren insbesondere für die Herstellung einer metallisch dichtenden Verbindung zwischen einem Fitting und einem Rohrstück.

Des Weiteren wird die oben aufgezeigte Aufgabe durch einen Fitting für eine metallisch dichtende Verbindung mit mindestens einem metallischen Rohr gelöst, mit einem aus Metall bestehenden Fittinggrundkörper und mit einer Presshülse, vorzugsweise in Form eines Pressrings, wobei der Fittinggrundkörper eine zylindrische Muffe mit einem an den Außendurchmesser des zu verbindenden Rohres angepassten Innendurchmesser aufweist, wobei die Presshülse an einem Ende einen Aufnahmeabschnitt zur Aufnahme eines endseitigen Teils der Muffe aufweist, wobei die Presshülse einen Pressabschnitt aufweist, dessen Innenprofil sich in axialer Richtung auf einen Durchmesser kleiner als der Außendurchmesser des Fittinggrundkörpers verjüngt, wobei in einer Ausgangsposition der Fittinggrundkörper in die Presshülse teilweise eingesteckt ist und wobei das Innenprofil des Pressabschnitts geeignet ist, während einer axialen Verschiebung auf den Fittinggrundkörper den Rand der Muffe auf einen Innendurchmesser zu verjüngen, der kleiner als der Außendurchmesser des zu verbindenden Rohres ist.

Während des Verpressens wird bei dem zuvor beschriebenen Fitting der vorzugsweise glatte und gratfreie Rand der zylindrischen Muffe des Fittinggrundkörpers radial nach innen verformt bzw. umgebördelt. Somit entsteht ein sogenannter Dichtbördel. Der Rand der zylindrischen Muffe wird also über den gesamten Umfang durch den Pressvorgang zu einer Schneidkante. Eine bereits vor dem Verpressen vorgesehene Schneidkante oder Schneidrippe ist somit nicht erforderlich.

Der Begriff Zylinder bzw. zylindrisch wird im Rahmen dieser Beschreibung als gerader Zylinder verstanden, wobei neben dem am häufigsten vorkommenden Kreiszylinder auch Zylinder mit von der Kreisform abweichender Grundfläche mit umfasst werden. Der Fitting ist also nicht auf kreiszylindrische Fittinggrundkörper und Rohre beschränkt.

Der beschriebene Fitting kann somit sehr kostengünstig hergestellt werden, da nur Bauteile mit einfachster Geometrie benötigt werden. Der Bauraum für einen Fitting ist somit minimiert, wodurch insbesondere der Aufwand für eine Wärmedämmung im eingebauten Zustand reduziert werden kann.

Zudem kann dann, wenn das Rohr und der Fittinggrundkörper aus dem gleichen Material bestehen, eine werkstoffreine Verbindung durch das Verpressen hergestellt werden. Daher hat der beschriebene Fitting ein großes Einsatzgebiet, da nur der Fittingwerkstoff den Einsatz begrenzt. Dabei kommen als Werkstoffe beispielsweise Kupfer, Edelstahl, verzinkter Stahl, Rotguss sowie geeignete Kunststoffe in Betracht.

Die Presshülse des beschriebenen Fittings wird bevorzugt so auf den Fittinggrundkörper aufgeschoben, dass die Presshülse danach durch Selbsthemmung ohne weitere Hilfsmittel auf dem Fittinggrundkörper verbleibt. Dazu kann der Innendurchmesser bzw. das Innenprofil des Aufnahmeabschnitts so ausgebildet sein, dass eine leichte Presspassung mit dem Fittinggrundkörper realisiert wird. Dazu kann entweder der Innendurchmesser vollständig angepasst sein oder die Innenfläche aufgeraut sein. Die Presshülse kann somit werkseitig mit dem Fittinggrundkörper fest verbunden werden, so dass ein baustellenseitiges Verbinden vermieden wird.

In bevorzugter Weise ist der Aufnahmeabschnitt zylindrisch ausgebildet, so dass die Muffe des Fittinggrundkörpers entlang des zylindrischen Aufnahmeabschnitts aufgenommen und gehalten wird.

Ebenso ist es möglich, den Aufnahmeabschnitt der Presshülse sich verjüngend auszubilden, insbesondere mit einem konisch verlaufenden Innenprofil mit flachem Winkel. In diesem Fall ist der Querschnitt der Öffnung am Aufnahmeabschnitt der Presshülse größer als der Außendurchmesser der Muffe des Fittinggrundkörpers, wodurch das Einführen erleichtert wird. Die Muffe wird dann beim Einstecken in den Aufnahmeabschnitt geführt, bis aufgrund des sich verjüngenden Querschnitts des Aufnahmeabschnitts der Presshülse fest auf der Muffe aufsitzt.

In weiter bevorzugter Weise weist der Pressabschnitt ein konisch, rund oder bauchig verlaufendes Innenprofil auf. Jedenfalls wird durch das Innenprofil gewährleistet, dass bei einem Aufschieben der Presshülse der Rand der Muffe radial nach innen gezwungen und somit umgebördelt wird. Dabei ist die Ausbildung als konisch verlaufendes Innenprofil bevorzugt, weil dadurch ein gleichmäßiges und stetig verlaufendes Umbördeln gewährleistet wird. Verläuft die Innenkontur dagegen rund oder bauchig, dann verstärkt sich während des Aufschiebens der Presshülse die Steigung nach innen, so dass mit einem kürzeren Verschiebeweg ein stärkeres Umbördeln erreicht werden kann. Zudem ist in diesem Fall der Winkel steiler, mit dem der Rand der Muffe in das Material des Rohres einschneidet.

In weiter bevorzugter Weise beträgt der Winkel des Pressabschnitts zur axialen Ausrichtung der Presshülse und somit zum Rohr selbst ca. 1 bis 30°, bevorzugt 10 bis 20°. Der Winkel wird jeweils an das verwendete Material und die Größenverhältnisse des umzuformenden Fittinggrundkörpers und der Rohrwandung angepasst.

Die Presshülse besteht aus einem Material, das härter als das Material des Fittinggrundkörpers ist. Insbesondere besteht das Material bevorzugt aus einem Metall, beispielsweise Kupfer, Edelstahl, verzinkter Stahl und Rotguss. Ebenso kommen geeignete Kunststoffe in Betracht. In bevorzugter Weise besteht die Oberfläche des Pressabschnitts aus dem gleichen Material der Presshülse.

Für ein gleichmäßiges Verformen der Muffe des Fittinggrundkörpers ist es bevorzugt, dass der Pressabschnitt oberflächengehärtet ist, um sicherzustellen, dass die Muffe sich nicht in das Material der Presshülse, sondern garantiert in das Material des Rohres, insbesondere des Metallrohres einschneidet. Bei der Verwendung von Mehrschichtrohren besteht die äußere Schicht in der Regel aus einem Kunststoff und eine in der Mitte des Verbundes angeordnete Schicht besteht aus einem Metall. In diesem Fall ist eine Umformung in soweit erforderlich, dass eine dauerhafte Abdichtung durch die Umformung des Fittinggrundkörpers entsteht. Dazu kann es erforderlich sein, dass der Fittinggrundkörper soweit umgebördelt werden muss, bis auch die innen liegende Metallschicht zumindest teilweise verformt ist.

Wenn - wie oben erläutert - das Innenprofil des Aufnahmeabschnitts sich verjüngend ausgebildet ist, kann der Aufnahmeabschnitt und der Pressabschnitt in einer gleichmäßigen Innenkontur verlaufen und beispielsweise eine gleiche Steigung, zumindest im Übergangsbereich zwischen beiden Abschnitten aufweisen. Somit könnten der Aufnahmeabschnitt und der Pressabschnitt nicht durch einen Wechsel in der Innenkontur voneinander unterschieden werden und sich nur durch ihre jeweilige Funktion voneinander abgrenzen lassen. Insbesondere kann die Presshülse einen Innenkonus aufweisen, der im Bereich der Öffnung den Aufnahmeabschnitt bildet und daran nach innen angrenzend den Pressabschnitt.

Der zuvor beschriebene Fitting bestehend aus Fittinggrundkörper und Presshülse ist für alle Arten von Axialschiebewerkzeugen geeignet. Es kommt während des Verpressens nur darauf an, dass die Presshülse axial auf die Muffe des Fittinggrundkörpers aufgeschoben wird. Durch die axiale Bewegung wird umfangseitig ein gleichmäßiges Umbördeln des Randes und somit ein gleichmäßiges Pressergebnis gewährleistet.

Insbesondere kann der Fitting durch eine zuvor beschriebene Pressbacke mit Schiebeeinheit verpresst werden. Dazu weist der Fittinggrundkörper in bevorzugter Weise einen Klemmabschnitt zum Klemmen mittels eines ersten Backenpaares der Pressbacke auf. Das Klemmen kann dabei mit einer Stärke erfolgen, dass der Klemmabschnitt nur innerhalb des elastischen Bereiches verformt wird und nach dem Lösen der Pressbacke wieder in die Ausgangsposition zurückkehrt.

Das Klemmen kann aber auch zum teilweisen Verpressen im Bereich des Klemmabschnitts führen, wobei die Umformung rotationssymmetrisch oder auch in Form eines Mehrkants, insbesondere Sechskants zur Verdrehsicherung des Rohres relativ zum Fittinggrundkörper erfolgen. Diese Umformung erhöht die mechanische Festigkeit der Verbindung, dient allerdings nicht zum abdichtenden Verformen.

Darüber hinaus ist auch ein Verpressen mit Hilfe einer Pressbacke gemäß der DE 10 2008 010 083 A1 möglich. Diese Art von Pressbacke weist ein Backenpaar auf, das an beiden Seiten des Pressprofils eine schräge Kontur aufweist. Beim Zusammendrücken der Pressbacke werden zwei im Winkel schräg zueinander verlaufende Angriffsflächen aufeinander zu bewegt und somit eine axiale Verpressung ermöglichen. Dazu weist die Presshülse eine schräg verlaufende Anlagefläche und der Fittinggrundkörper einen, vorzugsweise in einer umlaufenden Vertiefung angeordneten Klemmring mit in entgegengesetzter Richtung verlaufenden Anlagefläche auf.

In weiter bevorzugter Weise ist im Fittinggrundkörper ein an die Muffe angrenzender Abschnitt mit geringerem Innendurchmesser vorgesehen, der in bekannter Weise als Anschlag dient. Somit kann das zu verbindenden Rohr bis zu diesem Anschlag in den Fitting eingeschoben werden, so dass eine ausreichende Führung des Rohres durch den Fitting vor dem Verpressen gewährleistet ist.

Ein weiterer Vorteil des beschriebenen Fittings besteht darin, dass dieser unverpresst undicht ist. Denn in der noch nicht verpressten Verbindung zwischen der Muffe des Fittinggrundkörpers und dem Rohr kann kein elastisches Dichtungsmaterial ein ungewolltes Abdichten hervorrufen. Wenn also eine montierte Leitung mit dem oben beschriebenen Fitting unter Druck geprüft wird, so ist ein unverpresster Fitting undicht. Erst nach erfolgreichem axialen Verpressen kommt es zu einer Abdichtung.

Die zuvor erläuterten Fittings zeichnen sich durch eine einfache Geometrie aus, die gerade wegen der Einfachheit ein überraschend gutes Pressergebnis für eine metallisch dichtende Verbindung zwischen einem Fitting und einem Rohr liefert. Daher kann als Fittinggrundkörper ein an sich bekannter Lötfitting eingesetzt werden. Lediglich die Presshülse muss zusätzlich vorgesehen sein, um den Lötfitting ohne Löten durch axiales Aufschieben der Presshülse fest und metallisch dichtend mit einem eingestecktem Rohr zu verbinden.

Die beschriebenen Fittings können nahezu unbegrenzt eingesetzt werden. Zu einem Teil können die Fittings bekannte Lösungen durch eine kostengünstige Lösung ersetzen, so zum Beispiel im Bereich der Trinkwasserrohr- und Heizungsrohrinstallationen. Dagegen können auf der Basis der vorliegenden Beschreibung erstmals metallisch dichtende axial zu verpressende Fittings im auch in den Anwendungsbereichen Kältmittelanlagen, Industrieanlagen, insbesondere Erdgas-, Erdöl- und Benzinleitungen sowie Chemieindustrieanlagen, Solaranlagen, Installationsanlagen für die Leitung von medizinischen Gasen oder auch in der Luft- und Raumfahrtindustrie eingesetzt werden.

Die oben aufgezeigte Aufgabe wird weiterhin auch durch ein Verfahren zum metallisch dichtenden Verbinden eines Fittings mit einem metallischen Rohr gelöst, bei dem eine Presshülse mit einem Aufnahmeabschnitt auf einer zylindrischen Muffe eines Fittinggrundkörpers angeordnet wird, bei dem ein Rohr in die zylindrische Muffe eingesteckt wird, bei dem die Presshülse mit Hilfe einer Pressbacke axial auf die Muffe aufgeschoben wird, bei dem durch einen sich verjüngenden innerhalb der Presshülse ausgebildeten Pressabschnitt der Rand der Muffe radial nach innen verformt wird, und bei dem der Rand der Muffe als Schneidkante in das Material des Rohres eingedrückt wird.

Somit kann das zuvor beschriebene Verfahren unabhängig von der konkreten Ausgestaltung der Pressbacke durchgeführt werden. Es ist lediglich erforderlich, dass die Pressbacke und die zur Kraftübertragung notwendigen Elemente des Fittings aneinander angepasst werden.

Hinsichtlich weiterer Ausgestaltungen und Vorteile des erfindungsgemäßen Verfahrens, der erfindungsgemäßen Pressbacke, des erfindungsgemäßen Systems bzw. des beschriebenen Fitting wird auf die jeweiligen Unteransprüche bzw. auf die folgenden Ausführungen verwiesen.

Im Folgenden wird die Erfindung anhand von einem in einer Zeichnung dargestellten Ausführungsbeispiel näher erläutert. In der Zeichnung zeigen:
- Fig.1: ein Ausführungsbeispiel einer Pressbacke mit geöffneten Backenhälften in perspektivischer Ansicht,
- Fig. 2: die Pressbacke aus Fig. 1 mit teilweise geschlossenen ersten Backenvierteln,
- Fig. 3a-c: die Pressbacke aus Fig. 2 mit geschlossenen ersten Backenvierteln in verschiedenen Ansichten,
- Fig. 4a-c: die Pressbacke aus Fig. 3 mit zusätzlich geschlossenen zweiten Backenvierteln in verschiedenen Ansichten,
- Fig. 5: die Pressbacke aus Fig.1 mit geöffneten Backenhälften in perspektivischer Ansicht zusätzlich mit einem Fitting,
- Fig. 6a-c: die Pressbacke und den Fitting aus Fig. 5 mit vollständig eingelegtem Fitting und geschlossenen ersten Backenvierteln in verschiedenen Ansichten,
- Fig. 7a-c: die Pressbacke mit Fitting aus Fig. 6 mit geschlossenen zweiten Backenvierteln in verschiedenen Ansichten,
- Fig. 8: ein erstes Ausführungsbeispiel eines Fittings in einer perspektivischen Darstellung vor dem Verpressen,
- Fig. 9: den Fitting aus Fig. 8 im Querschnitt,
- Fig. 10: das erstes Ausführungsbeispiel eines Fittings in einer perspektivischen Darstellung nach dem Verpressen,
- Fig. 11: den Fitting aus Fig. 10 im Querschnitt,
- Fig. 12: ein zweites Ausführungsbeispiel eines Fittings im Querschnitt vor dem Verpressen,
- Fig. 13: den Fitting aus Fig. 12 im Querschnitt nach dem Verpressen,
- Fig. 14a-d: verschiedene Ausführungen des Innenprofils einer Presshülse,
- Fig. 15: ein drittes Ausführungsbeispiel eines Fittings in einer perspektivischen Darstellung vor dem Verpressen,
- Fig. 16: den Fitting aus Fig. 14 im Querschnitt mit angesetzter Pressbacke,
- Fig. 17: das dritte Ausführungsbeispiel eines Fittings in einer perspektivischen Darstellung nach dem Verpressen und
- Fig. 18: den Fitting aus Fig. 16 im Querschnitt.

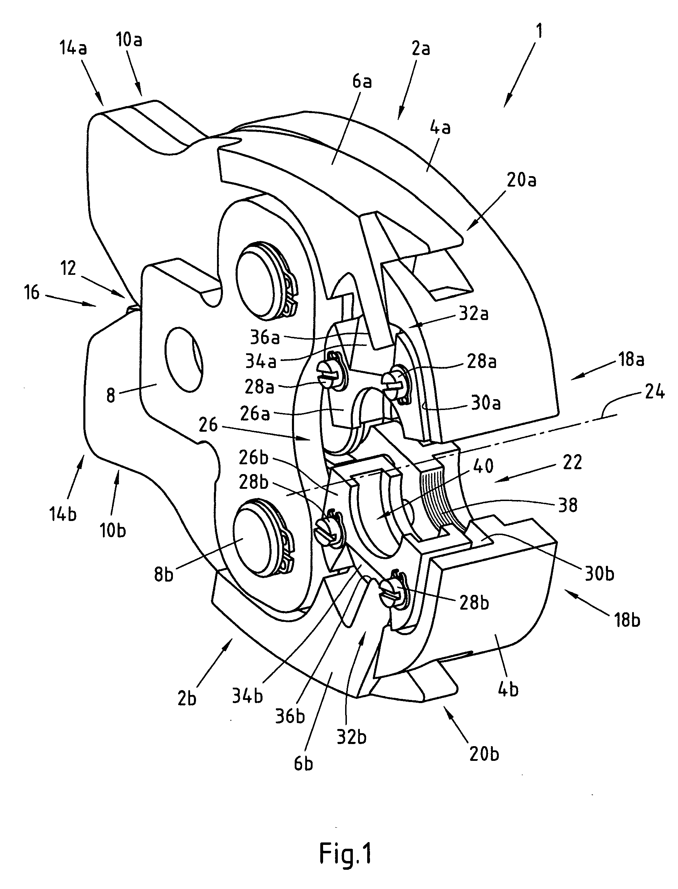

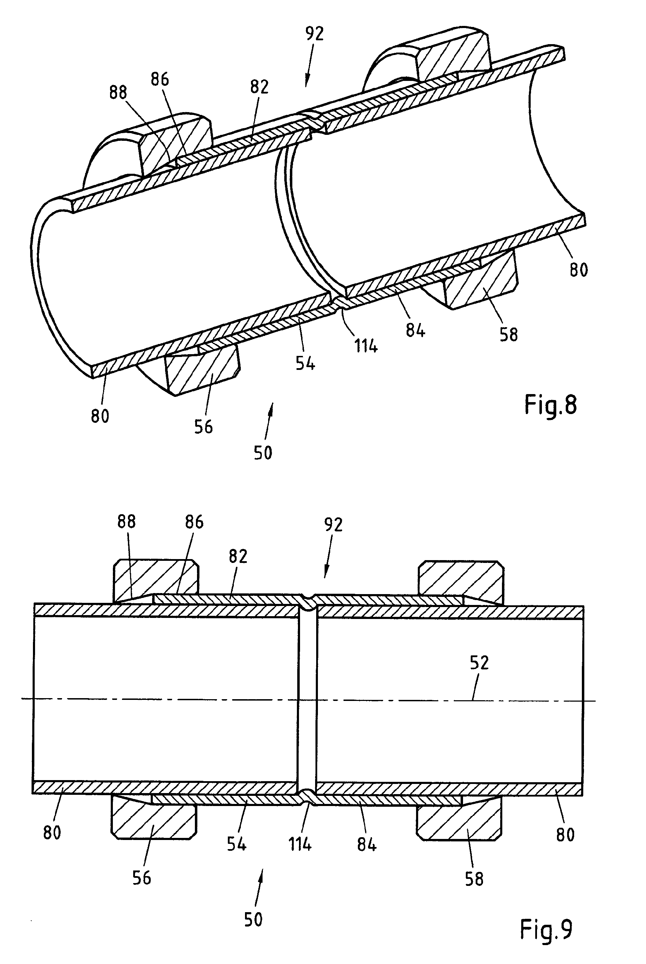

Im Folgenden wird unter Bezugnahme auf die Fig.1 bis 7 beispielhaft eine Pressbacke 1, ein System und ein Verfahren gemäß der vorliegenden Erfindung erläutert. Die Fig. 8 bis 18 zeigen dagegen Ausführungsbeispiele von Fittings.

Fig. 1 zeigt ein Ausführungsbeispiel einer Pressbacke 1 mit geöffneten Backenhälften 2a, 2b in einer perspektivischen Ansicht. Die obere Bakenhälfte 2a der Pressbacke 1 besteht aus einem ersten oberen Backenviertel 4a und einem zweiten oberen Backenviertel 6a. Die untere Balkenhälfte 2b besteht aus einem ersten unteren Backenviertel 4b und einen zweiten unteren Backenviertel 6b. Die Pressbacke 1 ist in Fig.1 mit geöffneten Backenhälften 2a, 2b dargestellt, d.h. sowohl die ersten Backenviertel 4a, 4b als auch die zweiten Backenviertel 6a, 6b befinden sich in vollständig geöffneter Stellung. Die Halterung 8 weist eine obere Drehachse 8a, welche die oberen Backenviertel 4a, 6a schwenkbar lagert, und eine untere Drehachse 8b, welche die unteren Backenviertel 4b, 6b schwenkbar lagert, auf.

Die ersten Backenviertel 4a, 4b weisen jeweils ein hinteres Ende 10a, 10b auf, welche eine Einlaufgeometrie 12 für eine Pressmaschine bilden. Ebenso bilden die hinteren Enden 14a, 14b der zweiten Backenviertel 6a, 6b eine Einlaufgeometrie 16 für die Pressmaschine. Zwischen den vorderen Enden 18a, 18b der ersten Backenviertel 4a, 4b und den vorderen Enden 20a, 20b der zweiten Backenviertel 6a, 6b wird ein Aufnahmebereich 22 gebildet. Der Aufnahmebereich 22 weist eine Aufnahmebereichsachse 24 auf. Die Aufnahmebereichsachse 24 verläuft in wesentlichen parallel zu den Drehachsen 8a und 8b der Halterung 8. Dadurch sind die ersten Backenviertel 4a, 4b und die entlang der Aufnahmebereichsachse versetzt angeordneten zweiten Backenviertel 6a, 6b jeweils in einer Ebene quer zur Aufnahmebereichsachse 24 bzw. quer zu den Drehachsen 8a, 8b verschwenkbar.

Die Pressbacke 1 weist des Weiteren eine Schiebeeinheit 26 auf, welche ein oberes Schiebeelement 26a und ein unteres Schiebeelement 26b aufweist. Das obere Schiebeelement 26a der Schiebeeinheit 26 ist über die Führungsmittel 28a mit dem ersten oberen Backenviertel 4a verbunden. Das untere Schiebeelement 26b ist über die Führungsmittel 28b mit dem erste unteren Backenviertel 4b verbunden. Die Führungsmittel 28a, 28b sind in Form von Führungsschienen oder -bolzen ausgestaltet, welche im Wesentlichen parallel zu der Aufnahmebereichsachse 24 verlaufen. Die Schiebeelemente 26a, 26b sind über die Führungsmittel 28a, 28b in entsprechende Aufnahmen 30a, 30b der ersten Backenviertel 4a, 4b verschiebbar. In Fig. 1 ist die Schiebeeinheit 26 in der aus den ersten Backenviertel 4a, 4b herausgefahrenen Position dargestellt.

Zwischen dem oberen Schiebeelement 26a der Schiebeeinheit 26 und dem zweiten oberen Backenviertel 6a ist eine Kopplung 32a vorgesehen, während zwischen dem unteren Schiebeelement 26b der Schiebeeinheit 26 und dem zweiten unteren Backenviertel 6b eine Kopplung 32b vorgesehen ist. In dem gezeigten Ausführungsbeispiel ist sind die Kopplungen 32a, 32b jeweils als aneinander angepasste Kontaktflächen 34a, 34b, 36a, 36b an den Schiebeelementen 26a, 26b der Schiebeeinheit 26 und den zweiten Backenvierteln 6a, 6b realisiert. Die an dem oberen Schiebeelement 26a angeordnete Kontaktfläche 34a ist dabei in Kontakt mit der Kontaktfläche 36a des zweiten oberen Backenviertels 6a, während die an dem unteren Schiebeelement 26b angeordnete Kontaktfläche 34b ist dabei in Kontakt mit der Kontaktfläche 36b des zweiten oberen Backenviertels 6b. Durch die Kopplungen 32a, 32b ist die zur Aufnahmebereichsachse 24 im Wesentlichen parallele Verschiebung der Schiebeeinheit 26 an die Schließbewegung der zweiten Backenviertel 6a, 6b im Wesentlichen quer zur Aufnahmebereichsachse 24 teilweise gekoppelt, wie aus den weiteren Figuren ersichtlich wird.

Der Aufnahmebereich 22 ist im Wesentlichen zweigeteilt. Durch die den Aufnahmebereich 22 begrenzende und mit einem Klemmprofil versehene Innenkontur 38 der ersten Backenviertel 4a, 4b wird ein erster Teilbereich gebildet, in welchem ein Einklemmen bzw. Fixieren eines Werkstücks, insbesondere eines Fittinggrundkörpers, in Richtung der Aufnahmebereichsachse, erfolgen kann. In dem durch die Schiebeelemente 26a, 26b der Schiebeeinheit 26 begrenzten zweiten Teilbereich des Aufnahmebereichs 22 kann ein Werkstück, insbesondere eine Presshülse, durch die Schiebeeinheit 26 parallel zur Aufnahmebereichsachse 24 bzw. Werkstücksachse verschoben werden. Hierzu weist die Schiebeeinheit 26 eine entsprechend angepasste Innenkontur 40 auf.

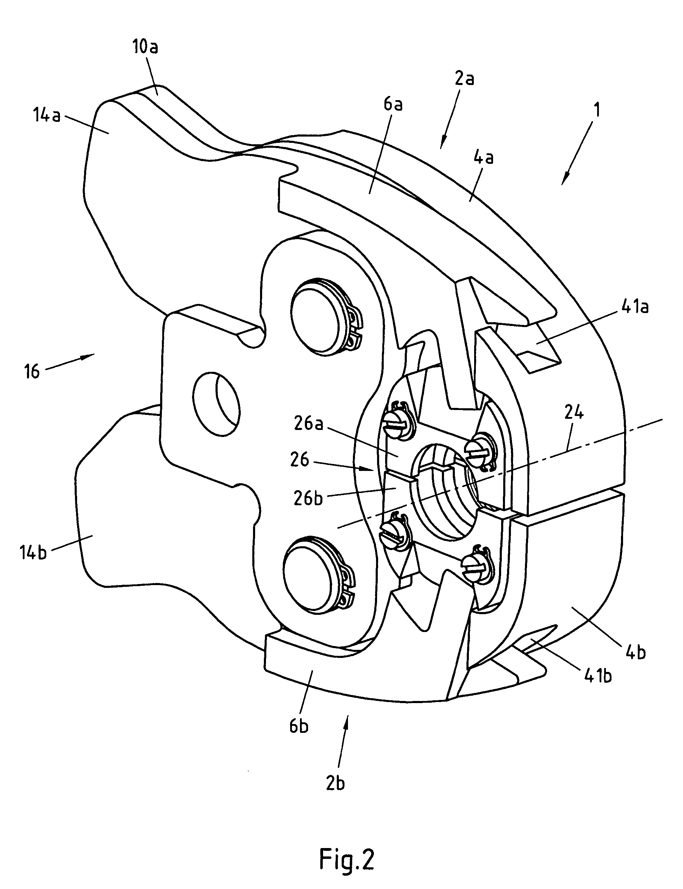

Fig. 2 zeigt die Pressbacke 1 aus Fig. 1 mit teilweise geschlossenen ersten Backenvierteln 2a, 2b. In diesem Zustand kann die Pressbacke 1 insbesondere an einem oder mehreren Werkstücken angesetzt sein, ohne dass ein Klemm- und/oder Pressvorgang gestartet ist. Durch ein Auseinanderdrücken der die Einlaufgeometrie 12 bildenden hinteren Enden 10a, 10b der ersten Backenviertel 4a, 4b werden die ersten Backenviertel 4a, 4b fast vollständig geschlossen. Die Einlaufgeometrie 16 der zweiten Backenviertel 6a, 6b ist dabei in der Nähe des hinteren Endes 14a, 14b der zweiten Backenviertel 6a, 6b ähnlich zu der Einlaufgeometrie 12 der ersten Backenviertel 4a, 4b ausgebildet. Dadurch schließen sich auch die zweiten Backenviertel 6a, 6b zunächst parallel du den ersten Backenvierteln 4a, 4b. Das zweite obere Backenviertel 6a und das erste obere Backenviertel 4a haben sich somit relativ zueinander nicht bewegt. Gleiches gilt für die unteren Backenviertel 4b, 6b. Dies ist unter anderem auch daran zu erkennen, dass die zweiten Backenviertel 6a, 6b wie in Fig. 1 weiterhin nicht in die vorgesehenen Aussparungen 41a, 41b an den ersten Backenviertel in 4a, 4b greifen.

Durch die Bewegung der ersten Backenviertel 4a, 4b im Wesentlichen quer zur Aufnahmebereichsachse 24 wurden die Schiebeelemente 26a, 26b entsprechend im Wesentlichen quer zur Aufnahmebereichsachse 24 mitbewegt. Insofern haben auch das zweite obere Backenviertel 6a und das obere Schiebeelement 26a relativ zueinander die gleiche Position. Entsprechendes gilt für das zweite unteren Backenviertel 6b und das untere Schiebeelement etwa 26b. In Richtung der Aufnahmebereichsachse 24 ist die Schiebeeinheit 26 also nicht verschoben.

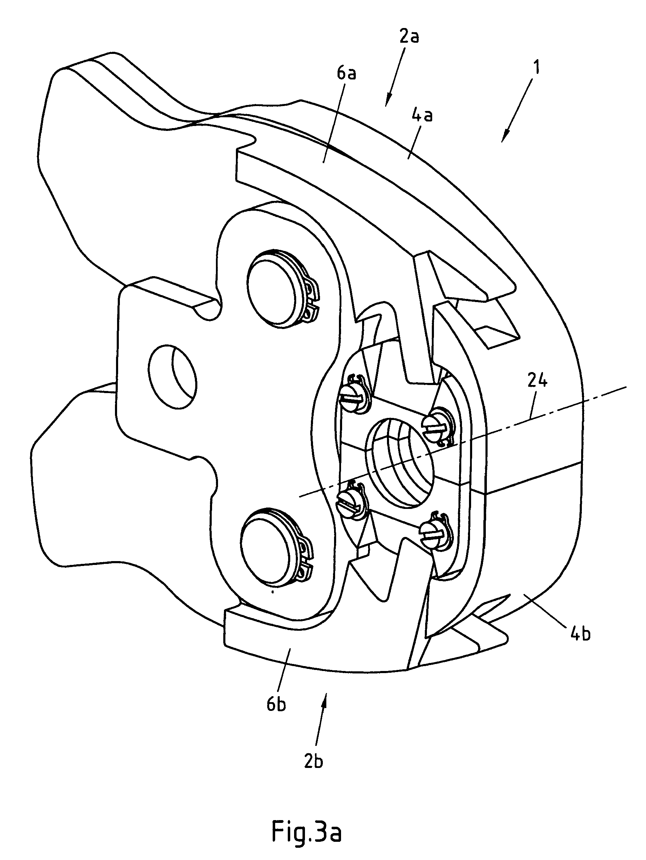

Fig. 3a-c zeigen die Pressbacke 1 aus Fig. 2 mit geschlossenen ersten Backenvierteln 4a, 4b in verschiedenen Ansichten. Fig. 3a zeigt zunächst eine perspektivische Ansicht. Im Unterschied zu Fig. 2 sind die ersten Backenviertel 4a, 4b nun vollständig geschlossen. Sowohl die vorderen Enden 18a, 18b der ersten Backenviertel 4a, 4b als auch die Schiebeelemente 26a, 26b liegen aufeinander auf. Die Innenkontur 38 der ersten Backenviertel 4a, 4b und die Innenkontur 40 der Schiebeeinheit 26 bilden einen in Umfangsrichtung geschlossenen Aufnahmebereich 22.

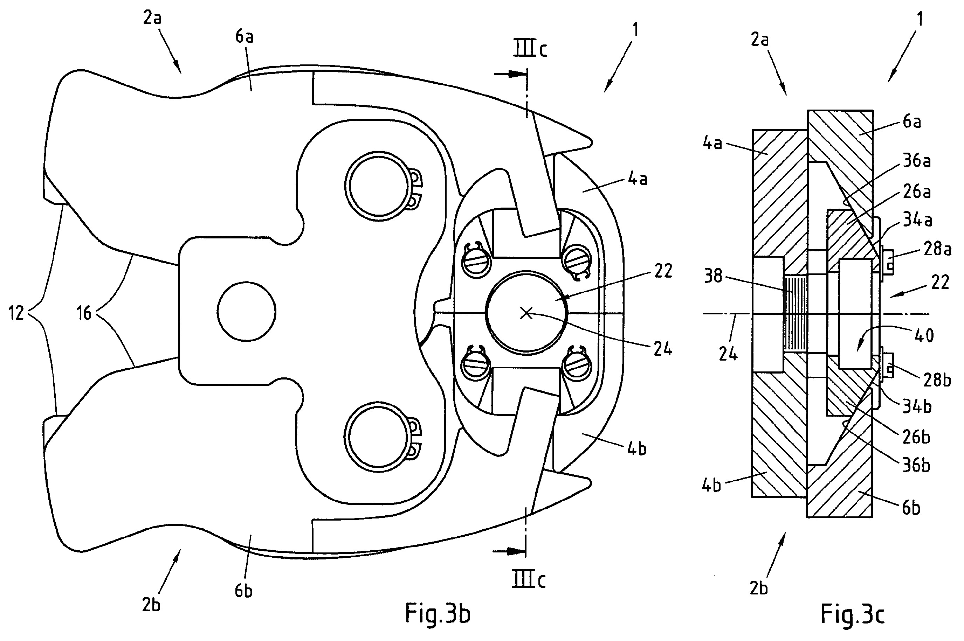

In der in Fig. 3b dargestellten Seitenansicht ist erkennbar, dass der Aufnahmebereich 24 einen im Wesentlichen kreisförmigen Querschnitt hat. Allerdings sind auch beispielsweise elliptische oder mehreckige Querschnitte möglich.

Die Einlaufgeometrie 16 der der zweiten Backenviertel 6a, 6b verjüngt sich in Richtung vorderes Ende 20a, 20b der zweiten Backenviertel 6a, 6b im Vergleich zu der Einlaufgeometrie 12 der ersten Backenviertel 4a, 4b stärker. Aufgrund der unterschiedlichen Einlaufgeometrien 12,16 kann eine Pressmaschine die zweiten Backenviertel 6a, 6b zeitversetzt zu den ersten Backenvierteln 4a, 4b schließen.

Fig. 3c zeigt einen Querschnitt entlang der Linie IIIc aus Fig. 3b durch die vorderen Enden 18a, 18b, 20a, 20b, der Backenviertel 4a, 4b, 6a, 6b im Bereich des Aufnahmebereichs 22. Die zweiten Backenviertel 6a, 6b sind weiter geöffnet als die bereits vollständig geschlossenen ersten Backenviertel 4a, 4b. Die Schiebeelemente 26a, 26b sind im Vergleich zu Fig. 1 noch nicht parallel zur Aufnahmebereichsachse 24 verschoben. Die Schiebeeinheit 26 ist von den ersten Backenvierteln 4a, 4b beabstandet. Die Kontaktflächen 34a, 34b der Schiebeelemente 26a bzw. 26b stehen bereits mit der entsprechenden Kontaktfläche 36a bzw. 36b der zweiten Backenviertel 6a bzw. 6b in Kontakt. Die Kontaktflächen 34a, 34b, 36a, 36b weisen einen Winkel von ungefähr 50° gegenüber der Aufnahmebereichsachse 24 auf.

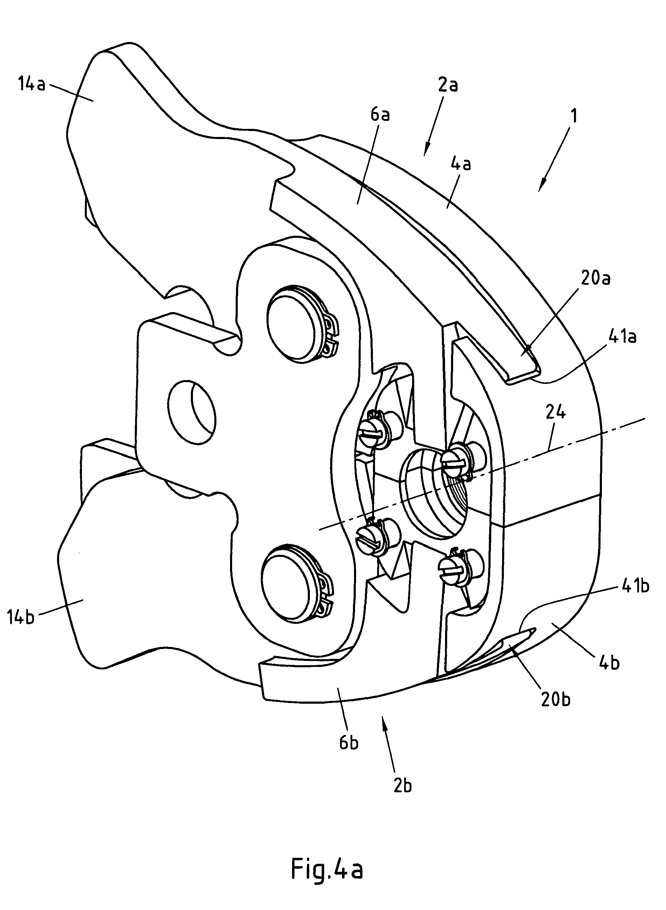

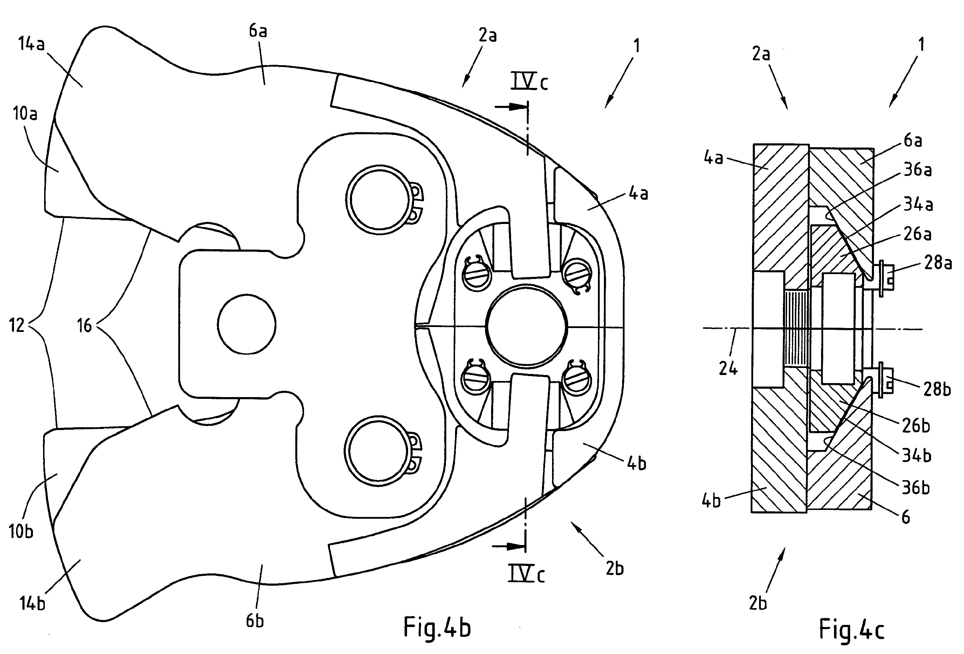

Fig. 4a-c zeigen die Pressbacke 1 aus Fig. 3 in einer zu Fig. 3 analogen Darstellung allerdings zusätzlich mit geschlossenen zweiten Backenvierteln 6a, 6b. Fig. 4a zeigt eine perspektivische Ansicht der Pressback 1, während Fig. 4b eine Seitenansicht zeigt. Im Unterschied zu Fig. 3 sind die zweiten Backenviertel 6a, 6b nun ebenfalls durch eine weitere Bewegung quer zu Aufnahmebereichsachse 24 vollständig geschlossen. Dies ist unter anderem an den nun weiter auseinander gedrückten Enden 14a, 14b der zweiten Backenviertel 6a, 6b zu erkennen. Dadurch greifen die vorderen Enden 20a, 20b nunmehr in die vorgesehenen Aussparungen 41a, 41b an den ersten Backenviertel in 4a, 4b ein. Durch die Schließbewegung der zweiten Backenviertel 6a, 6b im Wesentlichen quer zur Aufnahmebereichsachse 24 bewegen sich die zweiten Backenviertel 6a, 6b relativ zum entsprechenden ersten Backenviertel 4a bzw. 4b. Infolgedessen gleitet die Kontaktfläche 34a des oberen Schiebeelements 26a an der Kontaktfläche 36a des zweiten oberen Backenviertels 6a und die Kontaktfläche 34b des unteren Schiebeelements 26b an der Kontaktfläche 36b des zweiten unteren Backenviertels 6b entlang. Da die Schiebeelemente 26a, 26b der Schiebeeinheit 26 aufgrund der Führungsmittel 28a, 28b keine Bewegungsfreiheit quer zur Aufnahmebereichsachse 24 haben, resultiert aus der Kopplung zwischen den zweiten Backenvierteln 6a, 6b und den Schiebeelementen 26a, 26b eine Bewegung der Schiebeelemente 26a, 26b parallel zur Aufnahmebereichsachse 24 in die Aufnahmen 30a, 30b hinein.

Fig. 4c zeigt analog zu Fig. 3c einen Querschnitt entlang der Linie IVc aus Fig. 4b. Im Unterschied zu Fig. 3c befinden sich die Schiebeelemente 26a, 26b der Schiebeeinheit 26 nun in Anschlag mit den ersten Backenviertel 4a, 4b, da die Schiebeelemente 26a, 26b durch die Schließbewegung der zweiten Backenviertel 6a, 6b quer zur Aufnahmebereichsachse auf die ersten Backenviertel 4a, 4b entlang der Führungsmittel 28a, 28b zubewegt wurden.

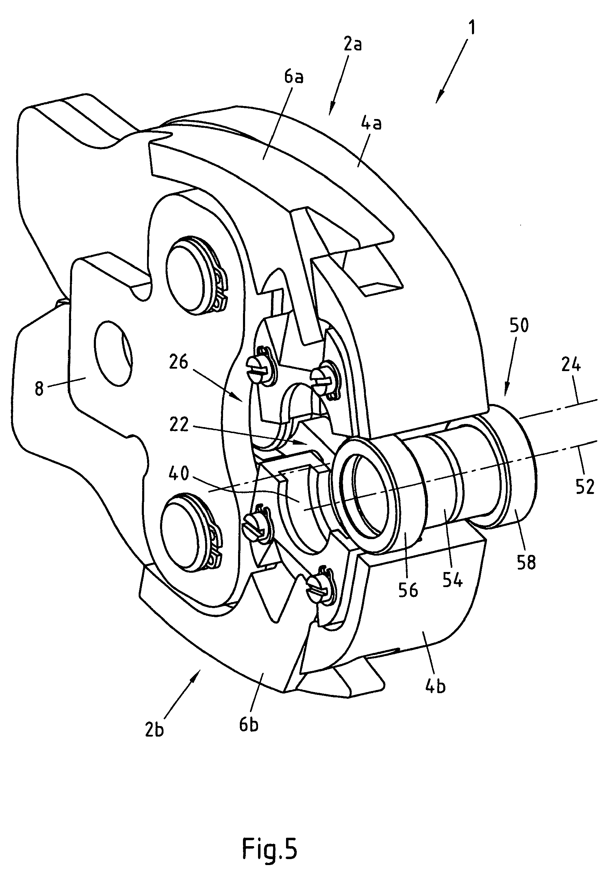

Fig. 5 zeigt unter anderem die Pressbacke aus Fig. 1. In Bezug auf die Beschreibung der Pressbacke 1 wird auf die Fig. 1 bis 4 verwiesen. Im Unterschied zu Fig. 1 zeigt Fig. 5 zusätzlich ein Werkstück in Form eines Fittings 50. Der Fitting umfasst einem Fittinggrundkörper 54 und zwei an den Fittinggrundkörper angesetzte Presshülsen 56 und 58. Der Fitting 50 ist im Wesentlichen rohrförmig ausgebildet. In der geöffneten Stellung der Backenhälften 2a, 2b kann der die Achse 52 aufweisende Fitting 50 quer zur Aufnahmebereichsachse 24 in den Aufnahmebereich 22 eingebracht werden.

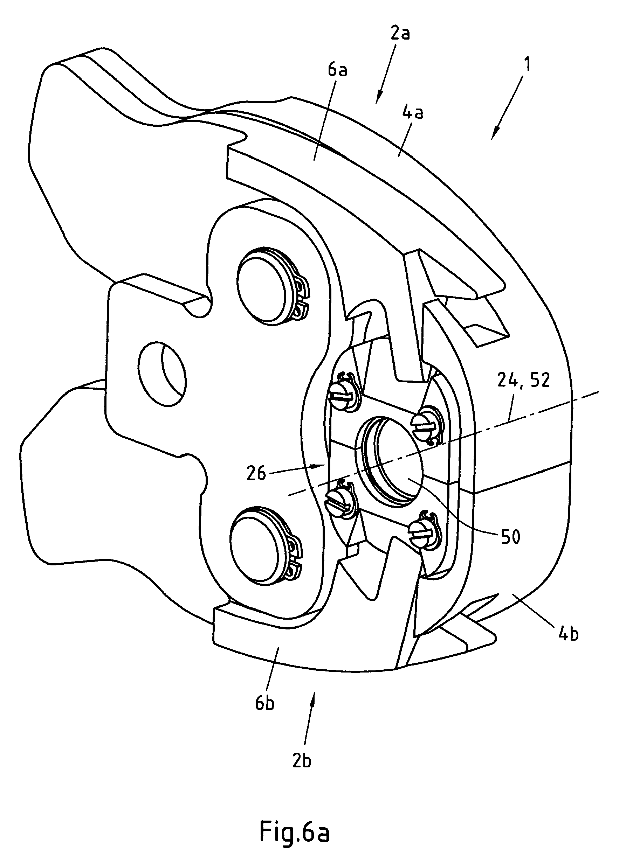

Analog zu den Fig. 3a-c zeigen die Fig. 6a-c die Pressbacke 1 und den Fitting 50 aus Fig. 5 mit geschlossenen ersten Backenvierteln 4a, 4b in verschiedenen Ansichten. Die Achse 52 des Fittings 50 fällt bei geschlossenen ersten Backenvierteln 4a, 4b mit der Aufnahmebereichsachse 24 zusammen. Die Innenkontur 38 der ersten Backenviertel 4a, 4b ist an die Außenumfangsfläche des Fittinggrundkörpers 54 des Fittings 50 angepasst. In der geschlossenen Stellung der ersten Backenviertel 4a, 4b klemmt daher die Innenkontur 38 den Fittinggrundkörper 54 ein. Dabei kann auch eine Verpressung des Fittinggrundkörpers 54 quer zur Werkstücksachse 52 vorgesehen sein. Vorzugsweise findet allerdings lediglich ein Einklemmen statt, sodass der Fittinggrundkörper 54 gegen Bewegungen in Richtung der Werkstücksachse 52 bzw. in Richtung der Aufnahmebereichsachse 24 gegenüber der Pressbacke 1 gesichert ist.

In der in den Fig. 6a-c gezeigten Position des Schiebeelements 26 hintergreift das Schiebeeinheit 26 die Presshülse 56. Die Anpassung der Schiebeeinheit 26 wird durch radial einwärtige Vorsprünge 44a, 44b des oberen bzw. unteren Schiebeelements 26a bzw. 26b auf der Innenkontur 40 der Schiebeeinheit 26 erreicht, welche die Presshülse 56 hintergreifen.

Werden die zweiten Backenviertel 6a, 6b nun quer zur Aufnahmebereichsachse 24 in ihre geschlossene Stellung bewegt, wird durch die Kopplung 32a, 32b die Schiebeeinheit 26 im Wesentlichen parallel zur Aufnahmebereichsache 24 bewegt, wodurch die Presshülse 56 in Richtung der Achse 52 des Fittings 50 auf den Fittinggrundkörper aufgeschoben wird. Hierdurch kann beispielsweise ein in den Fitting 50 eingeschobenes Rohr (nicht dargestellt) mit dem Fitting 50 verpresst werden.

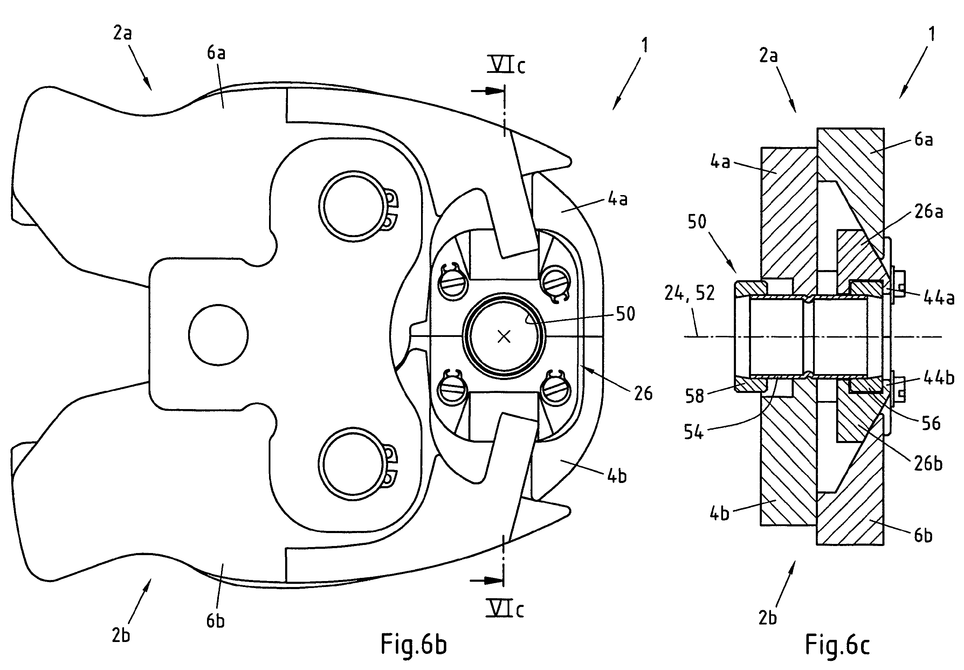

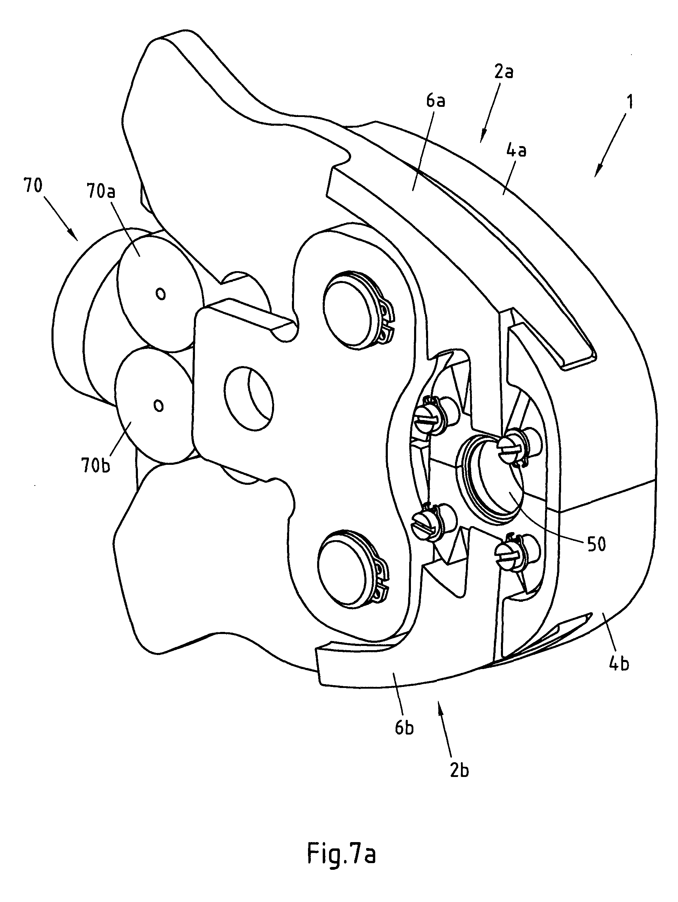

Dieser Zustand ist in den Fig. 7a-c gezeigt, welche die Pressbacke 1 mit Fitting 50 aus Fig. 6 mit geschlossenen zweiten Backenvierteln 6a, 6b in verschiedenen Ansichten analog zu den Fig. 4a-c zeigen.

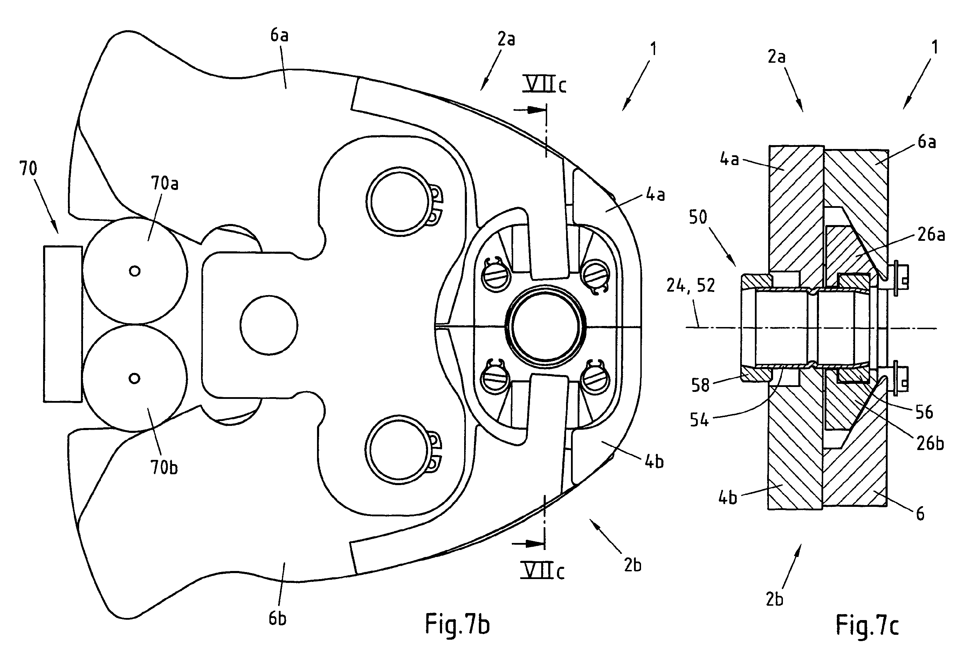

Die Presshülse 58, welche wie in Fig. 7c zu erkennen weiterhin nur aufgesetzt ist, kann durch ein um 180° gedrehtes Einbringen des Fittings 50 in den Aufnahmebereich 22 dann auf die gleiche Art und Weise wie die Presshülse 56 durch die Pressbacke 1 auf den Fittinggrundkörper 54 aufgeschoben werden.

In den Fig. 7a und 7b ist zudem eine Pressmaschine 70 gezeigt. Durch Einführen der Rollen 70a, 70b zwischen die die Einlaufgeometrien 12, 16 bildenden hinteren Enden 10a, 10b bzw. 14a, 14b wird die Pressbacke nach und nach geschlossen. In der in Fig. 7 gezeigt Stellung der Pressbacke 1 ist diese bereits ganz geschlossen, d. h. die Rollen 70a, 70b der Pressmaschine 70 sind soweit eingefahren, dass sowohl die ersten Backenviertel 4a, 4b also auch die zweiten Backenviertel 6a, 6b vollständig geschlossen sind.

Anschließend können alle Backenviertel 4a, 4b; 6a; 6b, beispielsweise gemeinsam per Hand, geöffnet werden und die Pressbacke 1 von dem verpressten Fitting 50, welcher eine unlösbare Rohrverbindung herstellen kann, entfernt werden.

Im Folgenden werden Fittings anhand der Fig. 8 bis 18 näher erläutert.

Die Fig. 8 bis 11 zeigen ein erstes Ausführungsbeispiel eines Fittings 50 sowohl jeweils in perspektivischer Ansicht als auch im Querschnitt.

Der Fitting 50 ist für eine metallisch dichtende Verbindung mit mindestens einem metallischen Rohr 80 vorgesehen. Ein aus Metall bestehenden Fittinggrundkörper 54 weist eine zylindrische Muffe 82 mit einem an den Außendurchmesser des zu verbindenden Rohres 80 angepassten Innendurchmesser auf. Somit kann das dargestellte Rohrende des Rohres 80 in die Muffe 82 eingesteckt werden, um anschließend mit dem Fittinggrundkörper 54 verbunden zu werden.

Des Weiteren ist an dem links dargestellten Ende des Fittinggrundkörpers 54 eine Presshülse 56 in Form eines Pressrings vorgesehen. Am anderen Ende des Fittinggrundkörpers 54 ist ebenfalls eine Muffe 84 vorgesehen, die in gleicher Weise mit der Presshülse 58 und mit dem Rohr 80 zusammenwirkt, wie die Muffe 82 mit der Presshülse 56 und dem Rohr 80. Daher wird im Folgenden nur auf die Muffe 82 und deren Funktionsweise eingegangen.

Die Presshülse 56 weist an einem Ende einen Aufnahmeabschnitt 86 zur Aufnahme eines endseitigen Teils der Muffe 82 auf. Somit kann die Presshülse 56 auf die Muffe 82 teilweise aufgeschoben werden, um damit einen ausreichenden Halt bei gleichzeitig genauer Positionierung der Presshülse 56 relativ zur Muffe 82 zu erreichen. In der in den Fig. 8 und 9 dargestellten Ausgangsposition ist somit der Fittinggrundkörper 54 in die Presshülse 56 teilweise eingesteckt. Dabei ist es bevorzugt, dass die Innenkontur des Aufnahmeabschnitts 86 zu einer Selbsthemmung führt, wenn die Presshülse 56 auf die Muffe 82 aufgesetzt worden ist. Dazu kann der Innendurchmesser so gewählt werden, dass eine leichte Presspassung mit der Muffe 82 erreicht wird. Ebenso kann die Innenkontur des Aufnahmeabschnitts 86 mit einer aufgerauten Oberfläche versehen sein, um die selbsthemmende Wirkung zu erzielen.

Des Weiteren weist die Presshülse 56 einen Pressabschnitt 88 auf, dessen Innenprofil sich in axialer Richtung auf einen Durchmesser kleiner als der Außendurchmesser des Fittinggrundkörpers 54 verjüngt. Das Innenprofil des Pressabschnitts 88 ist somit geeignet, während einer axialen Verschiebung auf den Fittinggrundkörper 54 den Rand der Muffe 82 auf einen Innendurchmesser zu verjüngen, der kleiner als der Außendurchmesser des zu verbindenden Rohres 80 ist.

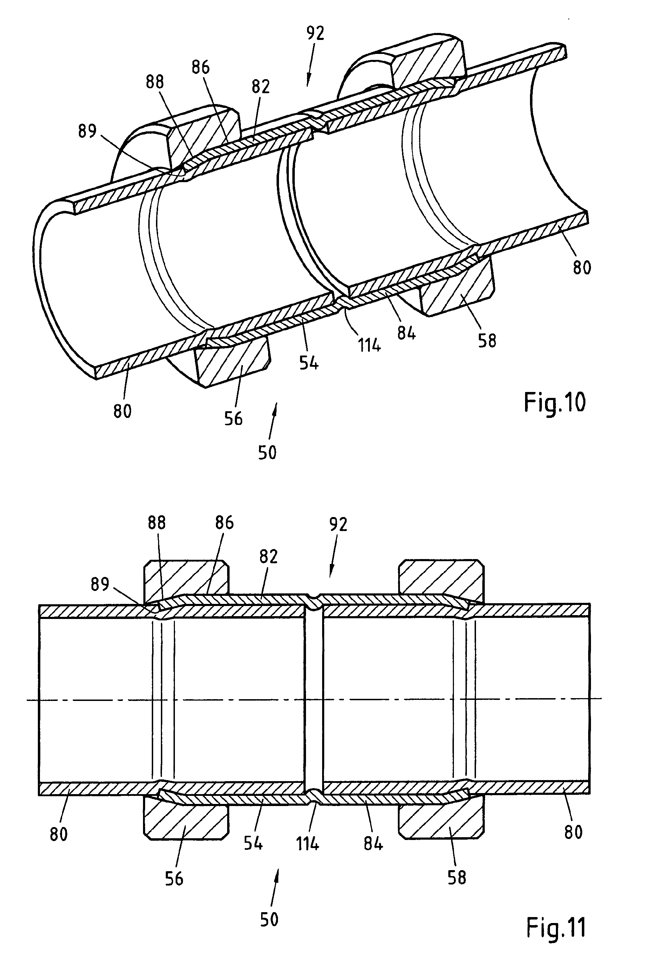

Dieser Zustand ist in den Fig. 10 und 11 dargestellt. Die in die Presshülse 56 eingesteckte Muffe 82 des Fittinggrundkörpers 56 ist radial nach innen umgeformt bzw. umgebördelt, so dass sich der Rand der Muffe 82 in das Material des Rohres 80 einschneidet. Somit wird über den gesamten Umfang der Muffe 82 eine Schneidkante 89 als Dichtbördel ausgebildet, die eine metallisch dichtende Verbindung zwischen Fittinggrundkörper 54 und dem Rohr 80 realisiert.

Der gerade verlaufende Rand des zylindrischen Fittings 50 bzw. der zylindrischen Muffe 82 wird also durch den Pressvorgang zu einer umfangseitigen Schneidkante 89 umgeformt.

Die zuvor erläuterte Funktionsweise des links dargestellten Fittinggrundkörpers 54 mit Muffe 82 im Zusammenwirken mit der Presshülse 36 und dem Rohr 80 gilt gleichermaßen für die rechts dargestellte Muffe 84, Presshülse 58 und Rohr 80.

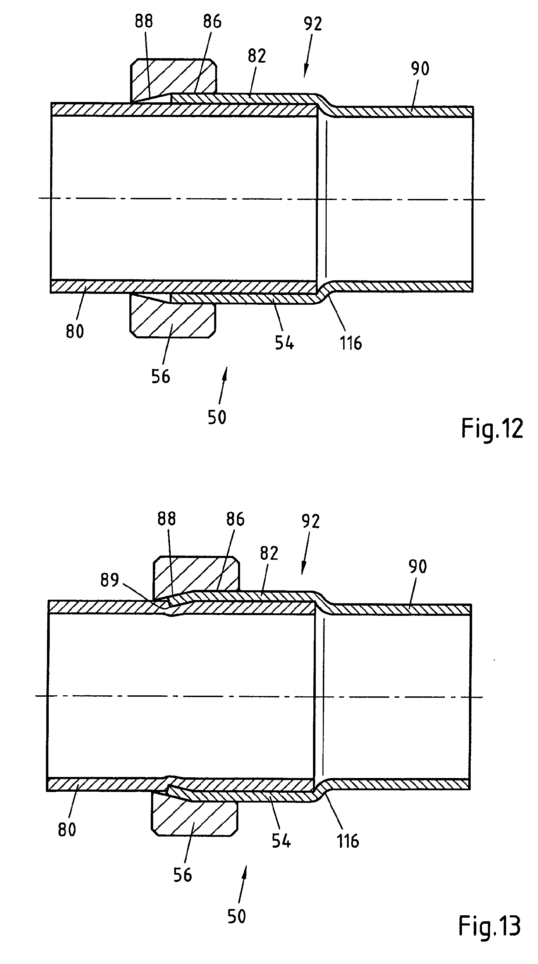

In Fig. 12 (unverpresst) und Fig. 13 (verpresst) ist ein zweites Ausführungsbeispiel eines Fittings 50 dargestellt, bei dem der Fittinggrundkörper 54 nur an einem Ende mit einer Muffe 54 und einer Presshülse 56 versehen ist, während das rechts dargestellte Ende als Einsteckende 90 ausgebildet ist. Dargestellt ist dabei ein gerader Verlauf des Fittinggrundkörpers. Daneben sind auch gekrümmte Bögen, T-Stücke oder Armaturen als Fittinggrundkörper möglich.

Wie in den Fig. 8 bis 13 dargestellt ist, ist der Aufnahmeabschnitt 86 zylindrisch ausgebildet. Daher kann die Muffe 82 durch die axiale Führung des Aufnahmeabschnitts 86 exakt positioniert werden, wodurch ein gutes und gleichmäßiges Pressergebnis realisiert werden kann.

Des Weiteren ist der Pressabschnitt 88 konisch ausgebildet, wie ebenfalls in den Fig. 8 bis 11 dargestellt ist. Dadurch wird eine gleichmäßige Umformung des Endes der Muffe 82 erreicht. Zwischen dem Aufnahmenabschnitt 86 und dem Pressabschnitt 88 verläuft dann eine umlaufende Kante 87.

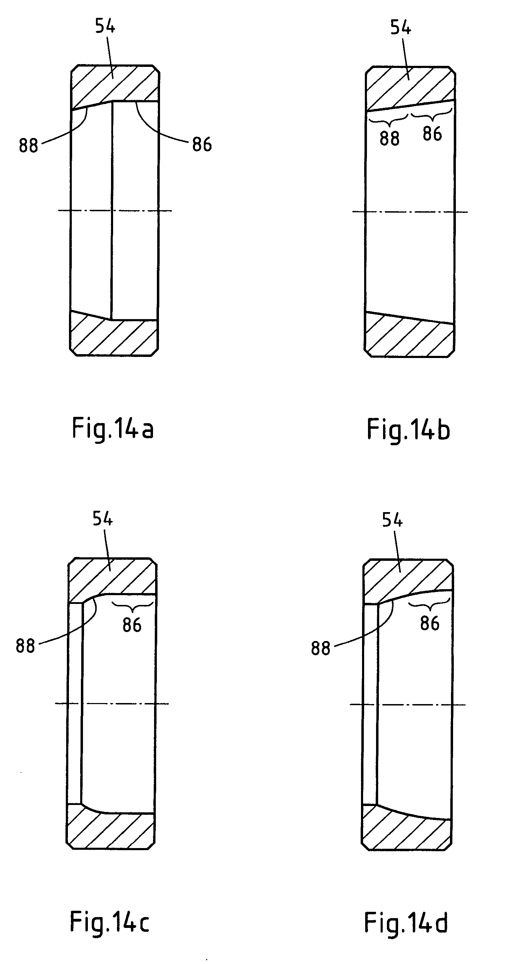

In Fig. 14 sind mehrere mögliche Innenkonturen der Presshülse 56 dargestellt, wobei der Aufnahmeabschnitt 86 und auch der Pressabschnitt 88 verschiedene Konturen aufweisen.

In Fig. 14a ist die Innenkontur aus den Fig. 8 bis 13 dargestellt, bei der der Aufnahmeabschnitt 86 zylindrisch und der Pressabschnitt 88 konisch ausgebildet sind.

Fig. 14b zeigt eine Innenkontur mit einem insgesamt konischen Verlauf mit gleicher Steigung sowohl für den Aufnahmeabschnitt 86 als auch für den Pressabschnitt 88, so dass diese beiden Abschnitte nicht direkt voneinander unterschieden werden können. Daher wird in einer gleichmäßig verlaufenden Innenkontur ein erster Abschnitt als Aufnahmeabschnitt 86 und der angrenzende Abschnitt als Pressabschnitt 88 bezeichnet, die die jeweiligen Abschnitte die genannten Funktionen übernehmen. Die flache Steigung ermöglicht es dem Aufnahmeabschnitt 86 die Muffe (hier nicht dargestellt) selbsthemmend aufzunehmen, so dass die Presshülse 54 auf dem Fittinggrundkörper (hier nicht dargestellt) vorinstalliert werden kann.

In Fig. 14c ist der Aufnahmeabschnitt 86 erneut zylindrisch ausgebildet, während der Pressabschnitt 88 rund bzw. bauchig ausgebildet ist. Die Unterscheidung zwischen rund und bauchig hängt dabei davon ab, welcher Radiusverlauf für die gekrümmte Innenkontur des Pressabschnitts 88 gewählt wird.

Fig. 14d zeigt schließlich eine Presshülse 54, bei der sowohl der Aufnahmeabschnitt 86 als auch der Pressabschnitt 88 mit einer gekrümmten Innenkontur in axialer Richtung aufweisen. Somit wird eine eingesteckte Muffe mit zunehmendem Einführen in die Presshülse zunächst geführt und danach mehr und mehr nach innen umgeformt.

Die in den dargestellten Ausführungsbeispielen sind die konischen Flächen in einem Winkel zur axialen Richtung dargestellt. Der bevorzugte Winkelbereich liegt dabei im Bereich von 1 bis 30°, insbesondere 10 bis 20°.

Der in den Fig. 8 bis 13 dargestellte Fitting ist für ein axiales Verpressen mit einer erfindungsgemäßen Pressbacke geeignet, die in Zusammenhang mit den Fig.1 bis 7 beschrieben worden ist. Der Vorgang des Verpressens ist insbesondere in den Fig. 5, 6c und 7c zu erkennen.

Dazu weist der Fittinggrundkörper 54 einen Klemmabschnitt 92 zum Klemmen mittels eines ersten Backenpaares 4a, 4b der oben beschriebenen Pressbacke auf. Der Klemmabschnitt 92 grenzt an den Abschnitt des Fittinggrundkörpers 54 an, der in die Presshülse 56 eingesteckt ist.

Durch das Klemmen mittels des Backenpaares 4a, 4b wird der Fittinggrundkörper 54 zusammen mit dem Rohr 80 axial fixiert, so dass das nachfolgende Aufschieben der Presshülse 56 auf den Fittinggrundkörper 54 erfolgen kann. Daher wird zunächst der Fittinggrundkörper 54 fixiert und danach erst die Presshülse 56 axial aufgepresst.

Die Pressbacken 4a, 4b können auch zu einem teilweisen Verpressen des Klemmabschnitts 92, also einem teilweisen dauerhaften Einformen einer Struktur in den Fittinggrundkörper 54 führen. Das Verpressen kann dabei rotationssymmetrisch oder auch in Form eines Mehrkants, insbesondere eines Sechskants zur Verdrehsicherung des Rohres 80 gegenüber dem Fittinggrundkörper 54 erfolgen. Das Verpressen im Bereich des Klemmabschnitts 92 erhöht zwar die mechanische Festigkeit der Verbindung, ersetzt aber nicht das axiale Verpressen der Presshülse 56 auf den Fittinggrundkörper 54.

Wie bereits erwähnt, ist das Verpressen des beschriebenen Fittings 50 nicht auf die Anwendung der erfindungsgemäßen Pressbacken beschränkt. Jede andere Form des axialen Verpressens kann bei dem Fitting 50 angewendet werden.

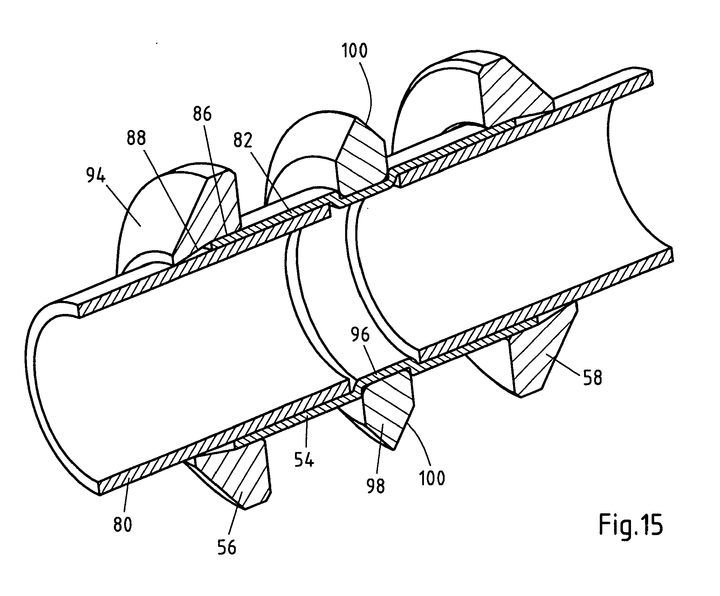

Ein Beispiel dafür ist in den Fig. 15 bis 18 als drittes Ausführungsbeispiel dargestellt, wobei gleiche Bezugszeichen für gleiche Elemente des Fittings 50 wie zuvor verwendet werden. Daher wird auch nur auf die Unterschiede zu den bisher erläuterten Ausführungsbeispielen Bezug genommen.

Das dritte Ausführungsbeispiel ist dafür geeignet, mit einer Pressbacke axial verpresst zu werden, wie sie in der DE 10 2008 010 083 A1 beschrieben worden ist.

Die Presshülse 56, die auf den Fittinggrundkörper 54 in der Ausgangsposition aufgeschoben ist, weist eine schräg verlaufende Anlagefläche 94 auf. Des Weiteren weist der Fittinggrundkörper 54 einen in einer umlaufenden Vertiefung 96 angeordneten Klemmring 98 mit einer Anlagefläche 100 auf, deren Ausrichtung in zur Anlagefläche 94 entgegengesetzter Richtung verläuft. Der Klemmring 98 ist zumindest teilweise elastisch ausgebildet, so dass er auf den aus Metall bestehenden Fittinggrundkörper 54 aufgesteckt werden kann. Gleichwohl ist der Klemmring 98 widerstandsfähig genug, um die Funktion eines Widerlagers für die axialen Presskräfte darstellen zu können, wie nachfolgend beschrieben wird.

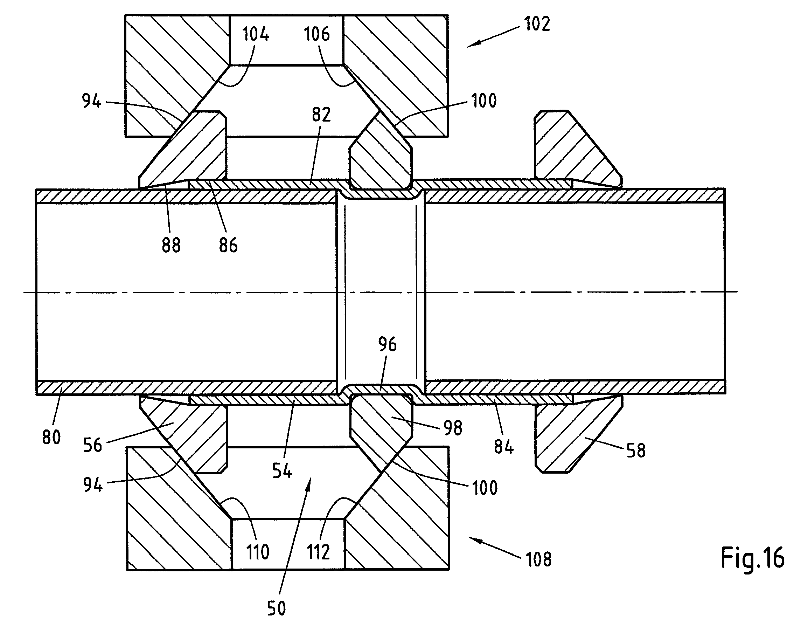

In Fig. 16 ist zusätzlich zum Fitting 50 eine Pressbacke 102 dargestellt, die zwei gegensinnig zueinander ausgerichtete Anlageflächen 104 und 106 aufweist. Die Anlagefläche 104 wirkt mit der Anlagefläche 94 der Presshülse 56 zusammen, während die Anlagefläche 106 mit der Anlagefläche 100 des Klemmrings 98 anliegt.

An der gegenüberliegenden Seite der Presshülse 56 liegt eine gleich ausgestaltete Pressbacke 108 mit Anlageflächen 110 und 112 an, wobei hier die Anlagefläche 110 mit der Anlagefläche 94 der Presshülse 56 und die Anlagefläche 112 mit der Anlagefläche 100 des Klemmrings 98 wechselwirken.

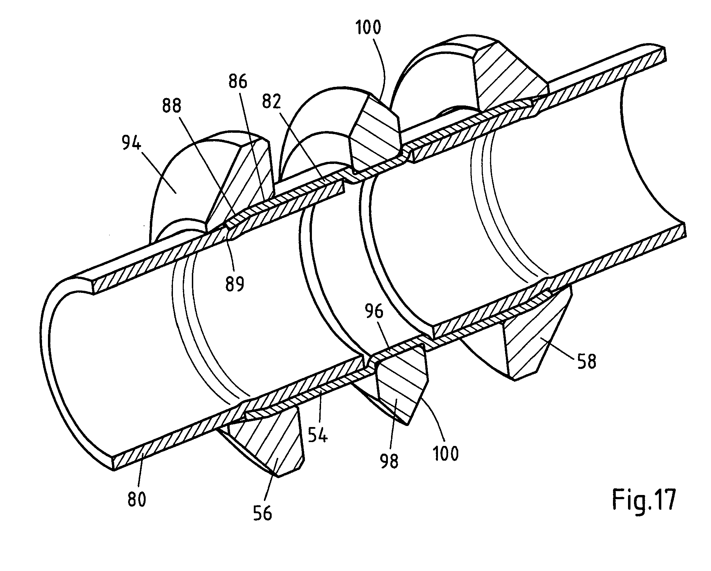

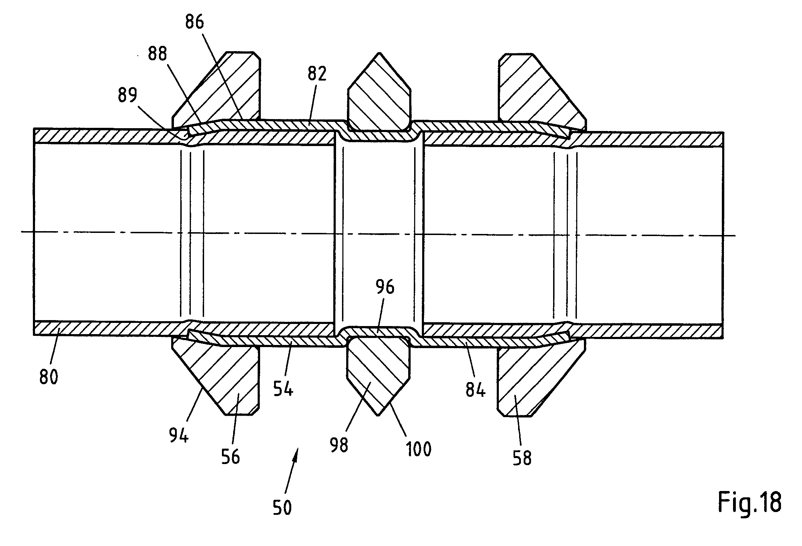

Während des Verpressens werden die beiden Pressbacken 102 und 108 aufeinander zu bewegt und die schrägen Anlageflächen gleiten aneinander ab, wodurch die Presshülse 56 auf den Fittinggrundkörper 54 aufgepresst wird. Dabei dient der Klemmring 98 als Widerlager. Den verpressten Zustand des Presshülse 56 zeigen dann die Fig. 17 und 18.

In den Fig. 15 bis 18 ist jeweils eine zweite Presshülse 58 dargestellt, wie schon bei den Fig. 8 bis 11. Auch die Presshülse 58 weist eine schräg verlaufende Anlagefläche und der Klemmring 98 ebenfalls eine dazu korrespondierende Anlagefläche auf. Daher kann die Presshülse 98 mit Hilfe des Klemmrings 98 und der beschriebenen Pressbacken 102 und 108, wenn diese entsprechend angesetzt worden sind, ebenfalls axial verpresst werden.

Die in den Fig. 8 bis 13 und 15 bis 18 dargestellten Fittinggrundkörper 54 können beispielsweise als Lötfitting ausgebildet sein. Diese preisgünstig herstellbaren Fittings können daher durch die vorliegende Erfindung in einfacher Weise metallisch dichtend axial verpresst werden.

Schließlich wird in den dargestellten Ausführungsbeispielen im Fittinggrundkörper 54 durch eine umlaufende Vertiefung 114, durch einen Absatz 116 oder durch die Vertiefung 96 für den Klemmring 98 ein Anschlag für das einzusteckende Rohr 80 gebildet.

## Patentansprüche

1. Pressbacke zum Herstellen einer unlösbaren Rohrverbindung
- mit einer oberen Backenhälfte (2a) und
- mit einer unteren Backenhälfte (2b),
- mit mindestens einer Drehachse, welche zumindest eine Backenhälfte (2a, 2b) schwenkbar lagert,
- mit einem zwischen der oberen Backenhälfte (2a) und der unteren Backenhälfte (2b) gebildeten und eine Aufnahmebereichsachse (24) aufweisenden Aufnahmebereich (22),
- wobei mindestens eine Backenhälfte (2a, 2b) zwischen einer offenen und einer geschlossenen Stellung im Wesentlichen quer zur Aufnahmebereichsachse (24) verschwenkbar ist,
**dadurch gekennzeichnet,**
- **dass** mindestens eine Schiebeeinheit (26) vorgesehen ist, wobei die Schiebeeinheit (26) eine im Wesentlichen quer zur Aufnahmebereichsachse (24) verlaufende Schwenkbewegung der mindestens einen Backenhälfte (2a, 2b) in eine zumindest teilweise parallel zur Aufnahmebereichsachse (24) gerichtete Verschiebung umwandelt.

2. Pressbacke nach Anspruch 1,
**dadurch gekennzeichnet,**
- **dass** die obere Backenhälfte (2a) ein erstes oberes Backenviertel (4a) und ein zweites oberes Backenviertel (6a) aufweist,
- **dass** die untere Backenhälfte (2b) ein erstes unteres Backenviertel (4b) und ein zweites unteres Backenviertel (6b) aufweist und
- **dass** die ersten Backenviertel (4a, 4b) zumindest teilweise unabhängig von den zweiten Backenvierteln (6a, 6b) schließbar sind.

3. Pressbacke nach Anspruch 2,
**dadurch gekennzeichnet,**
**dass** eine Kopplung (32a, 32b) zwischen der Schiebeeinheit (26) und mindestens einem zweiten Backenviertel (6a, 6b) vorgesehen ist, derart, dass die zur Aufnahmebereichsachse (24) zumindest teilweise parallele Verschiebung der Schiebeeinheit (26) an die Schließbewegung des mindestens einen zweiten Backenviertels (6a, 6b) im Wesentlichen quer zur Aufnahmebereichsachse (24) zumindest teilweise gekoppelt ist.

4. Pressbacke nach Anspruch 2 oder 3,
**dadurch gekennzeichnet,**
**dass** die Kopplung (32a, 32b) durch an der Schiebeeinheit (26) und zumindest einem zweiten Backenviertel (6a,6b) vorgesehene und aneinander angepasste Kontaktflächen (34a, 36a; 34b, 36b) realisiert ist, welche gegenüber der Aufnahmebereichsachse (24) geneigt sind.

5. Pressbacke nach einem der Ansprüche 2 bis 4,
**dadurch gekennzeichnet, dass**
die Kontaktflächen (34a, 36a; 34b, 36b) um mindestens 30°, bevorzugt um mindestens 40°, und besonders bevorzugt um mindestens 45°, und/oder um maximal 80°, bevorzugt um maximal 70°, besonders bevorzugt um maximal 60°, gegenüber der Aufnahmebereichsachse (24) geneigt sind.

6. Pressbacke nach einem der Ansprüche 2 bis 5,
**dadurch gekennzeichnet,**
- **dass** die zweiten Backenviertel (6a, 6b) gegenüber den ersten Backenviertel (4a, 4b) entlang der Aufnahmebereichsache (24) versetzt angeordnet sind.

7. Pressbacke einem der Ansprüche 2 bis 6,
**dadurch gekennzeichnet,**
- **dass** die ersten Backenviertel (4a, 4b) im Wesentlichen in einer ersten Ebene im Wesentlichen quer zur Aufnahmebereichsachse (24) liegen und
- **dass** die zweiten Backenvierteln (6a, 6b) im Wesentlichen in einer zweiten Ebene im Wesentlichen quer zur Aufnahmebereichsachse (24) liegen.

8. Pressbacke nach einem der Ansprüche 2 bis 7,
**dadurch gekennzeichnet,**
**dass** die ersten Backenviertel (4a, 4b) als Klemmbacken ausgebildet sind.

9. Pressbacke nach einem der Ansprüche 2 bis 8,
**dadurch gekennzeichnet,**
- **dass** die ersten Backenviertel (4a, 4b) eine erste Einlaufgeometrie (12) aufweisen,
- **dass** die zweiten Backenviertel (6a, 6b) eine zweite Einlaufgeometrie (14) aufweisen,
- wobei die erste Einlaufgeometrie (12) und die zweite Einlaufgeometrie (16) unterschiedlich ausgebildet sind.

10. Pressbacke nach einem der Ansprüche 2 bis 9,
**dadurch gekennzeichnet,**
**dass** Führungsmittel (28a, 28b) zwischen der Schiebeeinheit (26) und zumindest einem ersten Backenviertel (4a, 4b) vorgesehen sind, sodass die Bewegung der Schiebeeinheit (26) im Wesentlichen quer zur Aufnahmebereichsachse (24) an die Bewegung des entsprechenden zumindest einen ersten Backenviertels (4a, 4b) gekoppelt ist.

11. Pressbacke nach einem der Ansprüche 1 bis 10,
**dadurch gekennzeichnet,**
**dass** die Schiebeeinheit (26) ein oberes Schiebeelement (26a) und unteres Schiebeelement (26b) aufweist.

12. System
- mit einer Pressbacke (1) gemäß einem der Ansprüche 1 bis 11, und
- mit einem einen Fittinggrundkörper (54) und eine Presshülse (56, 58) aufweisenden Fitting (50),
- wobei der Aufnahmebereich (22) der Pressbacke (1) an den Fittinggrundkörper (54) angepasst ist und
- wobei die Schiebeeinheit (26) der Pressbacke (1) an die Presshülse (56,58) angepasst ist, sodass die Presshülse (56, 58) durch die zumindest teilweise zur Aufnahmebereichsachse (24) parallele Bewegung der Schiebeeinheit (26) zumindest teilweise auf den Fittinggrundkörper (54) aufschiebbar ist.

13. Verfahren zum Herstellen einer unlösbaren Rohrverbindung mit einer Pressbacke, insbesondere mit einer Pressbacke gemäß einem der Ansprüche 1 bis 11,
- bei dem durch Betätigung der Pressbacke ein in einem Aufnahmebereich der Pressbacke befindlicher Fittinggrundkörper fixiert wird und
- bei dem nach der Fixierung des Fittinggrundkörpers durch eine zur Aufnahmebereichsachse zumindest teilweise parallele Bewegung einer Schiebeeinheit der Pressbacke die Presshülse auf den Fittinggrundkörper aufgeschoben wird.

14. Verfahren nach Anspruch 13,
- bei dem das Rohrstück durch erste obere und untere Pressbackenviertel der Pressbacke fixiert wird und
- bei dem die zumindest teilweise zur Aufnahmebereichsachse parallele Bewegung der Schiebeeinheit durch eine Schließbewegung von zweiten unteren und oberen Pressbackenvierteln erreicht wird.

15. Verfahren nach Anspruch 13 oder 14,
bei dem eine metallisch dichtende Verbindung zwischen dem Fitting und dem Rohrstück hergestellt wird.

## Claims

1. Pressing jaw for producing a non-detachable pipe joint, having
- an upper jaw half (2a) and
- a lower jaw half (2b),
- at least one rotation axis which pivotally mounts at least one jaw half (2a, 2b),
- a receiving region (22) formed between the upper jaw half (2a) and the lower jaw half (2b), and having a receiving region axis (24),
- whereby at least one jaw half (2a, 2b) is able to pivot between an open position and a closed position substantially transversely to the receiving region axis (24), **characterised in**
- **that** at least one pushing unit (26) is provided, said pushing unit (26) transforming a pivotal movement of the at least one jaw half (2a, 2b) performed substantially transversely to the receiving region axis (24) into a displacement least partly parallel to the receiving region axis (24).

2. Pressing jaw according to claim 1,
**characterised in**
- **that** the upper jaw half (2a) has a first upper jaw quarter (4a) and a second upper jaw quarter (6a),
- **that** the lower jaw half (2b) has a first lower jaw quarter (4b) and a second lower jaw quarter (6b), and
- **that** the first jaw quarters (4a, 4b) can be closed at least partly independently of the second jaw quarters (6a, 6b).

3. Pressing jaw according to claim 2,
**characterised in**
**that** a coupling (32a, 32b) is provided between the pushing unit (26) and at least one second jaw quarter (6a, 6b) such that the displacement of the pushing unit (26) at least partly parallel to the receiving region axis (24) is at least partly coupled with the closing movement of the at least one second jaw quarter (6a, 6b) substantially transversely to the receiving region axis (24).

4. Pressing jaw according to claim 2 or 3,
**characterised in**
**that** the coupling (32a, 32b) is realised by contact surfaces (34a, 36a; 34b, 36b) which are provided on the pushing unit (26) and on at least one second jaw quarter (6a, 6b), are adapted to one another and are inclined relative to the receiving region axis (24).

5. Pressing jaw according to any one of claims 2 to 4,
**characterised in that**
the contact surfaces (34a, 36a; 34b, 36b) are inclined relative to the receiving region axis (24) by at least 30°, preferably by at least 40°, and particularly preferably by at least 45° and/or by a maximum of 80°, preferably by a maximum of 70°, particularly preferably by a maximum of 60°.

6. Pressing jaw according to any one of claims 2 to 5,
**characterised in**
- **that** the second jaw quarters (6a, 6b) are arranged offset relative to the first jaw quarters (4a, 4b) along the receiving region axis (24).

7. Pressing jaw according to any one of claims 2 to 6,
**characterised in**
- **that** the first jaw quarters (4a, 4b) are positioned substantially in a first plane substantially transversely to the receiving region axis (24) and
- **that** the second jaw quarters (6a, 6b) are positioned substantially in a second plane substantially transversely to the receiving region axis (24).

8. Pressing jaw according to any one of claims 2 to 7,
**characterised in**
**that** the first jaw quarters (4a, 4b) are configured as clamping jaws.

9. Pressing jaw according to any one of claims 2 to 8,
**characterised in**
- **that** the first jaw quarters (4a, 4b) have a first inlet geometry (12),
- **that** the second jaw quarters (6a, 6b) have a second inlet geometry (14),
- the first inlet geometry (12) and the second inlet geometry (16) being configured differently.

10. Pressing jaw according to any one of claims 2 to 9,
**characterised in**
**that** guide means (28a, 28b) are provided between the pushing unit (26) and at least one first jaw quarter (4a, 4b) so that the movement of the pushing unit (26) substantially transversely to the receiving region axis (24) is coupled with the movement of the corresponding at least one first jaw quarter (4a, 4b).

11. Pressing jaw according to any one of claims 1 to 10,
**characterised in**
**that** the pushing unit (26) has an upper pushing element (26a) and a lower pushing element (26b).

12. System, comprising
- a pressing jaw (1) according to any one of claims 1 to 11, and
- a fitting (50) having a base body (54) and a press sleeve (56, 58),
- wherein the receiving region (22) of the pressing jaw (1) is adapted to the fitting base body (54), and
- wherein the pushing unit (26) of the pressing jaw (1) is adapted to the press sleeve (56, 58) so that the press sleeve (56, 58) can be at least partly pushed onto the fitting base body (54) by the movement of the pushing unit (26) which movement is at least partly parallel to the receiving region axis (24).

13. Method for producing a non-detachable pipe joint using a pressing jaw, in particular using a pressing jaw according to any one of claims 1 to 11,
- wherein a fitting base body located in a receiving region of the pressing jaw is fixed by actuating the pressing jaw, and
- wherein after the fitting base body has been fixed, the press sleeve is pushed onto the fitting base body by a movement of a pushing unit of the pressing jaw, which movement is at least partly parallel to the receiving region axis.

14. Method according to claim 13
- wherein the section of pipe is fixed by first upper and lower pressing jaw quarters of the pressing jaw, and
- wherein the movement of the pushing unit which is at least partly parallel to the receiving region axis is produced by a closing movement of second lower and upper pressing jaw quarters.

15. Method according to claim 13 or 14,
wherein a metallically sealing joint between the fitting and the section of pipe is produced.

## Revendications

1. Mordache de serrage pour la réalisation d'un assemblage de tubes indétachable,
- comprenant une demi-mâchoire supérieure (2a) et
- comprenant une demi-mâchoire inférieure (2b),
- comprenant au moins un axe de rotation sur lequel est montée au moins une demi-mâchoire (2a, 2b) de manière à pouvoir pivoter,
- comprenant une zone de logement (22) formée entre la demi-mâchoire supérieure (2a) et la demi-mâchoire inférieure (2b) et présentant un axe de zone de logement (24),
- où au moins une demi-mâchoire (2a, 2b) peut pivoter entre une position ouverte et une position fermée, pratiquement de façon transversale par rapport à l'axe de zone de logement (24),
**caractérisée**
- **en ce qu'**il est prévu au moins un ensemble coulissant (26), où l'ensemble coulissant (26) transforme un mouvement pivotant de la demi-mâchoire (2a, 2b) au moins au nombre de un, ledit mouvement pivotant s'étendant pratiquement de façon transversale par rapport à l'axe de zone de logement (24), en un mouvement coulissant dirigé en étant au moins partiellement parallèle à l'axe de zone de logement (24).

2. Mordache de serrage selon la revendication 1, **caractérisée**
- **en ce que** la demi-mâchoire supérieure (2a) présente un premier quart de mâchoire supérieur (4a) et un second quart de mâchoire supérieur (6a),
- **en ce que** la demi-mâchoire inférieure (2b) présente un premier quart de mâchoire inférieur (4b) et un second quart de mâchoire inférieur (6b), et
- **en ce que** les premiers quarts de mâchoire (4a, 4b) peuvent se fermer, au moins partiellement, indépendamment des seconds quarts de mâchoire (6a, 6b).

3. Mordache de serrage selon la revendication 2,
**caractérisée**
**en ce qu'**il est prévu un couplage (32a, 32b) entre l'ensemble coulissant (26) et au moins un second quart de mâchoire (6a, 6b) de manière telle, que le mouvement coulissant de l'ensemble coulissant (26), au moins partiellement parallèle à l'axe de zone de logement (24), soit au moins partiellement couplé au mouvement de fermeture du second quart de mâchoire (6a, 6b) au moins au nombre de un, ledit mouvement de fermeture se produisant pratiquement de façon transversale par rapport à l'axe de zone de logement (24).

4. Mordache de serrage selon la revendication 2 ou 3, **caractérisée**
**en ce que** le couplage (32a, 32b) est réalisé par des surfaces de contact (34a, 36a ; 34b, 36b) prévues sur l'élément coulissant (26) et sur au moins un second quart de mâchoire (6a, 6b) et adaptées les unes aux autres, surfaces de contact qui sont inclinées par rapport à l'axe de zone de logement (24).

5. Mordache de serrage selon l'une quelconque des revendications 2 à 4,
**caractérisée**
**en ce que** les surfaces de contact (34a, 36a ; 34b, 36b) sont inclinées par rapport à l'axe de zone de logement (24), au moins de 30°, de préférence au moins de 40° et, de façon particulièrement préférable, au moins de 45° et/ou au maximum de 80°, de préférence au maximum de 70°, de façon particulièrement préférable au maximum de 60°.

6. Mordache de serrage selon l'une quelconque des revendications 2 à 5,
**caractérisée**
**en ce que** les seconds quarts de mâchoire (6a, 6b) sont disposés de façon décalée par rapport aux premiers quarts de mâchoire (4a, 4b), le long de l'axe de zone de logement (24).

7. Mordache de serrage selon l'une quelconque des revendications 2 à 6,
**caractérisée**
- **en ce que** les premiers quarts de mâchoire (4a, 4b) se situent pratiquement dans un premier plan, pratiquement de façon transversale par rapport à l'axe de zone de logement (24), et
- **en ce que** les seconds quarts de mâchoire (6a, 6b) se situent pratiquement dans un deuxième plan, pratiquement de façon transversale par rapport à l'axe de zone de logement (24).

8. Mordache de serrage selon l'une quelconque des revendications 2 à 7,
**caractérisée**
**en ce que** les premiers quarts de mâchoire (4a, 4b) sont configurés comme des mâchoires de serrage.

9. Mordache de serrage selon l'une quelconque des revendications 2 à 8,
**caractérisée**
- **en ce que** les premiers quarts de mâchoire (4a, 4b) présentent une première géométrie d'entrée (12),
- **en ce que** les seconds quarts de mâchoire (6a, 6b) présentent une deuxième géométrie d'entrée (16),
- où la première géométrie d'entrée (12) et la deuxième géométrie d'entrée (16) sont configurées de manière différente.

10. Mordache de serrage selon l'une quelconque des revendications 2 à 9,
**caractérisée**
**en ce qu'**il est prévu des moyens de guidage (28a, 28b) entre l'ensemble coulissant (26) et au moins un premier quart de mâchoire (4a, 4b), de sorte que le mouvement de l'ensemble coulissant (26) se produisant pratiquement de façon transversale par rapport à l'axe de zone de logement (24) est couplé au mouvement du premier quart de mâchoire correspondant (4a, 4b) au moins au nombre de un.

11. Mordache de serrage selon l'une quelconque des revendications 1 à 10,
**caractérisée**
**en ce que** l'ensemble coulissant (26) présente un élément coulissant supérieur (26a) et un élément coulissant inférieur (26b).

12. Système
- comprenant une mordache de serrage (1) selon l'une quelconque des revendications 1 à 11, et
- comprenant un raccord (50) présentant un corps de base de raccord (54) et une douille de serrage (56, 58),
- où la zone de logement (22) de la mordache de serrage (1) est adaptée au corps de base de raccord (54), et
- où l'ensemble coulissant (26) de la mordache de serrage (1) est adapté à la douille de serrage (56, 58), de sorte que la douille de serrage (56, 58), grâce au mouvement de l'ensemble coulissant (26), au moins partiellement parallèle à l'axe de zone de logement (24), peut être coulissée au moins partiellement sur le corps de base de raccord (54).

13. Procédé permettant la réalisation, avec une mordache de serrage, d'un assemblage de tubes indétachable, en particulier avec une mordache de serrage selon l'une quelconque des revendications 1 à 11,
- dans lequel un corps de base de raccord se trouvant dans une zone de logement de la mordache de serrage est fixé par actionnement de la mordache de serrage, et
- dans lequel la douille de serrage est coulissée sur le corps de base de raccord après la fixation du corps de base de raccord obtenue par un mouvement d'un ensemble coulissant de la mordache de serrage, ledit mouvement étant au moins partiellement parallèle à l'axe de zone de logement.

14. Procédé selon la revendication 13,
- dans lequel la pièce tubulaire est fixée par des premiers quarts supérieur et inférieur de la mordache de serrage, et
- dans lequel le mouvement de l'ensemble coulissant, au moins partiellement parallèle à l'axe de zone de logement, est obtenu par un mouvement de fermeture des seconds quarts inférieur et supérieur de la mordache de serrage.

15. Procédé selon la revendication 13 ou 14,
dans lequel est réalisé un assemblage assurant l'étanchéité métallique entre le raccord et la pièce tubulaire.
